(19) Europäisches Patentamt
European Patent Office
Office européen des brevets

(11) **EP 2 913 946 B1**

(12) **EUROPÄISCHE PATENTSCHRIFT**

(45) Veröffentlichungstag und Bekanntmachung des Hinweises auf die Patenterteilung:
**15.06.2016 Patentblatt 2016/24**

(21) Anmeldenummer: **15455002.4**

(22) Anmeldetag: **13.02.2015**

(51) Int Cl.:
*H04J 3/06* (2006.01)     *H04L 12/18* (2006.01)
*H04L 29/06* (2006.01)

(54) **Sprachübertragung in redundanten Systemen**

Voice transmission in redundant systems

Transmission de la parole dans des systèmes redondants

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2014 AT 501472014**

(43) Veröffentlichungstag der Anmeldung:
**02.09.2015 Patentblatt 2015/36**

(73) Patentinhaber: **Frequentis AG**
**1100 Wien (AT)**

(72) Erfinder: **Szabo, Ernst, Dipl.-Ing. Dr.**
**1140 Wien (AT)**

(74) Vertreter: **Wildhack & Jellinek**
**Patentanwälte**
**Landstraßer Hauptstraße 50**
**1030 Wien (AT)**

(56) Entgegenhaltungen:
**WO-A1-2008/147272     US-B1- 6 327 276**

- **OHSHIMA K ET AL: "A teleconferencing system with high-speed stream mixing for voice over IP", APPLICATIONS AND THE INTERNET, 2004. PROCEEDINGS. 2004 INTERNATIONAL S YMPOSIUM ON TOKYO, JAPAN 26-30 JAN. 2004, LOS ALAMITOS, CA, USA,IEEE COMPUT. SOC, US, 26. Januar 2004 (2004-01-26), Seiten 295-298, XP010682166, ISBN: 978-0-7695-2068-1**

EP 2 913 946 B1

**Beschreibung**

Die Erfindung betrifft ein Verfahren zur redundanten Übermittlung von Sprachdaten zwischen mehreren Teilnehmern, insbesondere in Form einer Konferenzschaltung, gemäß dem Oberbegriff des Patentanspruches 1 oder 2. Weiters betrifft die Erfindung ein Sprachvermittlungssystem gemäß dem Oberbegriff des Patentanspruches 7 und 8. Schließlich betrifft die Erfindung einen Datenträger, auf dem ein Programm zur Durchführung eines erfindungsgemäßen Verfahrens gespeichert ist.

Aus dem Stand der Technik sind eine Vielzahl verschiedener Verfahren zur Übermittlung von Sprachdaten sowie Sprachvermittlungssysteme bekannt, die über eine Mehrzahl redundanter Kommunikationsserver verfügen, wobei Sprachkommunikationsdaten über parallele Datenpfade mit unterschiedlicher Laufzeitcharakteristik zwischen den Kommunikationsteilnehmern übertragen werden.

Auch sind aus dem Stand der Technik Konferenzsysteme zur Sprachübertragung bekannt, mit denen eine Mehrzahl von Konferenzteilnehmer, die über ein Rechnersystem miteinander verbunden sind, über Kommunikationsserver Sprachdaten austauschen, wobei zwischen den einzelnen Teilnehmern eine Konferenzschaltung geschaltet wird.

Nachteilig ist hierbei vor allem, dass Sprachsignale, die von einzelnen Teilnehmern redundant über das Netzwerk ausgesandt werden, aufgrund unterschiedlicher Laufzeiten im Netzwerk bei den übrigen Kommunikationsteilnehmern zu unterschiedlichen Zeitpunkten ankommen.

Insbesondere besteht bei redundanten Kommunikationssystemen mit unterschiedlichen Signallaufzeiten das Problem, dass die gleiche Sprachmitteilungen einzelner Teilnehmer zeitversetzt erscheinen, wobei es je nach Laufzeitunterschied bei einer Addition dieser Signale zu Auslöschungen einzelner Frequenzbänder kommen kann.

Im Stand der Technik bestehen für dieses Problem unterschiedliche Lösungsansätze, wobei häufig Verfahren eingesetzt werden, bei denen die einzelnen über die Leitung übertragenen Signale mittels Korrelation korreliert werden und so die Laufzeitunterschiede zwischen den einzelnen Signalen ermittelt und ausgeglichen werden. Ein solches Vorgehen ist numerisch überaus aufwendig, da die Ausführung einer Korrelation numerisch aufwendig ist.

Aus der internationalen Anmeldung WO 2008/147272 A1 ist eine Konferenzierungsbridge bekannt, die eine Vielzahl ankommender Sprachpakete eines asynchronen Paketnetzwerks betrifft. Eine Kontrolleinheit überwacht die ankommenden Sprachpakete, um zeitlich einander zugeordnete Pakete weiterzuleiten. Eine Mischeinheit überlagert lediglich Pakete, die einander zeitlich zugeordnet sind.

Aus US 6327276 B1 ist ein Verfahren und ein System zum Konferenzieren von Audiosignalen einer Vielzahl von Kleinrechnern über ein lokales oder nicht lokales Netzwerk bekannt. Die einzelnen Sprachdaten werden in Pakete einer vorgegebenen Länge unterteilt, gefiltert und überlagert. Jeder Klient erhält ein individuelles Signal, aus dem jeweils dessen Echo entfernt wird.

Aufgabe der Erfindung ist es daher ein Verfahren zur Verfügung zu stellen, das Laufzeitunterschiede einzelner redundanter Signale kompensiert und eine zeitversetzte Überlagerung von Sprachdaten aufgrund unterschiedlicher Laufzeiten bei der Übertragung im Netzwerk vermeidet.

Die Erfindung löst diese Aufgabe bei einem Verfahren der eingangsgenannten Art mit dem kennzeichnenden Merkmal des Patentanspruches 1.

Werden die einzelnen Signale, die vom ersten Teilnehmerrechner herrühren, miteinander überlagert, so wird eine Auslöschung, die von unterschiedlichen Laufzeiteffekten unterschiedlicher Leitungen im Netzwerk herrührt, wirksam vermieden.

Darüber hinaus ist es auch auf einfache Weise möglich, im Falle der Auswahl eines Datenpakets eines Kommunikationsservers bzw. der Priorisierung der Datenpakete eines Kommunikationsservers eine Umschaltung der Auswahl zu bewirken, ohne dass konkrete Artefakte auftreten. Wird eine Umschaltung, z.B. bei sehr schlechter Übertragungsqualität, eines höher priorisierten Servers zu Gunsten eines niedriger priorisierten Servers vorgenommen, entstehen keine Artefakte. Dies ist insbesondere dann von Vorteil, wenn eine Umschaltung sehr häufig, z.B. mehrfach pro Sekunde auftritt.

Die Erfindung löst die Aufgabe bei einem Verfahren der eingangs genannten Art zur Kommunikation mit zwei Teilnehmern mit dem Merkmal des Patentanspruches 1, wobei vorgesehen ist,

- dass vom sendenden Teilnehmer Sprachinformationen erstellt werden und diese Sprachinformationen vom jeweiligen sendenden Teilnehmerrechner in einzelne, numerische Sprachdatenwerte unterteilt werden,

- dass vom sendenden Teilnehmer Datenpakete umfassend jeweils zumindest einen numerischen Sprachdatenwert, insbesondere mehrere unmittelbar hintereinander aufgenommene Sprachdatenwerte, erstellt werden, denen jeweils zumindest ein Zeitstempel in Form einer fortlaufenden Zahl zugewiesen ist, der die Reihenfolge der einzelnen Sprachdatenwerte zu den Sprachdatenwerten anderer Datenpakete festlegt,

- dass die Datenpakete des sendenden Teilnehmers an mit dem sendenden Teilnehmerrechner verbundene Kommunikationsserver übermittelt werden,

- dass von jedem Kommunikationsserver jeweils weitere Datenpakete erstellt werden, denen jeweils zumindest ein vom sendenden Teilnehmerrechner übertragener Sprachdatenwert und zumindest ein, weiterer Zeitstempel zugeordnet werden, wobei der Wert des weiteren Zeitstempels dem Rest der Division des Zeitstempels geteilt durch eine vorgegebene konstante positive ganze Zahl N entspricht, wobei N für sämtliche Kommunikationsserver gleich gewählt wird, und

- dass der empfangende Teilnehmerrechner ihm von den Kommunikationsservern übermittelte weitere Datenpakete empfängt und solche weiteren Datenpakete ermittelt, denen jeweils derselbe weitere Zeitstempel zugeordnet ist, und einen Sprachdatenwert durch Auswahl oder Summation der in den weiteren Datenpaketen enthaltenen Sprachdatenwerte mit jeweils gleichem weiteren Zeitstempel ermittelt und dem empfangenden Teilnehmer zur Verfügung hält.

Damit vermieden wird, dass zu unterschiedlichen Zeitpunkten erstellte Sprachdaten desselben sendenden Teilnehmers überlagert werden, ist vorgesehen, dass N wie folgt festgelegt wird:

$$N > (t_{delay,max} - t_{delay,min}) / t_{samp},$$

- wobei $t_{delay,max}$ die maximale Verzögerungszeit einer Verbindungsleitung zwischen einem sendenden oder empfangenden Teilnehmerrechner und einem Kommunikationsserver bezeichnet,
- wobei $t_{delay,min}$ die minimale Verzögerungszeit einer Verbindungsleitung zwischen einem sendenden oder empfangenden Teilnehmerrechner und einem Kommunikationsserver bezeichnet, und
- wobei $t_{samp}$ der Inversen der Abtastrate, entspricht.

Die Erfindung löst die Aufgabe bei einem Verfahren der eingangs genannten Art zur Durchführung einer Konferenz mit den kennzeichnenden Merkmalen des Patentanspruchs 2. Hierbei ist vorgesehen,

- dass von den sendenden Teilnehmern Sprachinformationen erstellt werden und diese Sprachinformationen vom jeweiligen sendenden Teilnehmerrechner in einzelne aufeinander folgende Sprachdatenwerte unterteilt werden,
- dass die sendenden Teilnehmer Datenpakete umfassend jeweils zumindest einen numerischen Sprachdatenwert, insbesondere mehrere unmittelbar hintereinander aufgenommene Sprachdatenwerte, erstellen, denen jeweils zumindest ein Zeitstempel in Form einer fortlaufenden Zahl zugewiesen ist, der die Reihenfolge der einzelnen Sprachdatenwerte zu den Sprachdatenwerten anderer Datenpakete desselben Teilnehmers festlegt,
- dass die Datenpakete jedes sendenden Teilnehmers an die mit dem sendenden Teilnehmerrechner verbundenen Kommunikationsserver übermittelt werden,
- dass die Kommunikationsserver ihnen jeweils von den sendenden Teilnehmerrechnern übermittelte Datenpakete empfangen und die in den Datenpaketen enthaltenen Sprachdatenwerte abspeichern, wobei die einzelnen Sprachdatenwerte jeweils mit einem weiteren Zeitstempel verknüpft abgespeichert werden, der dem Rest der Division des Zeitstempels geteilt durch eine vorgegebene positive ganze Zahl N entspricht,

- dass die Kommunikationsserver weitere Datenpakete erstellen, denen jeweils zumindest ein weiterer Zeitstempel zugeordnet wird und denen jeweils, insbesondere durch Überlagerung aus den Sprachdatenwerten, die mit dem gleichen weiteren Zeitstempel verknüpft sind, ermittelte, Sprachdatenwerte zugeordnet werden und
- dass der empfangende Teilnehmerrechner sämtliche ihm von den Kommunikationsservern übermittelte Datenpakete, denen jeweils derselbe Zeitstempel zugeordnet ist, überlagert oder aus den übermittelte Datenpaketen, denen derselbe Zeitstempel zugeordnet ist, ein Datenpaket auswählt und dem zweiten Teilnehmer zur Verfügung stellt.

Insbesondere kann vorgesehen sein, dass sämtliche bei den Kommunikationsservern einlangenden Sprachdaten zumindest, insbesondere genau einem weiteren Datenpaket zugeordnet und dem empfangenden Teilnehmer übermittelt werden.

Eine besonders einfache und mit handelsüblichen Sprachübermittlungs- und Konferenzsystemen kompatible Ausführungsform der Erfindung sieht vor, dass jedem Datenpaket jeweils Sprachdatenwerte in Form eines einzelnen Abtastwerts oder mehrerer Abtastwerte zugewiesen werden und dass die Sprachdaten in Form von Abtastwerten mittels Addition in den Kommunikationsservern überlagert werden.

Zur Vermeidung von Übertragungsfehlern bei Ausfällen eines der Kommunikationsserver kann vorgesehen sein, dass der Kommunikationsserver ausschließlich Datenpakete von sendenden Teilnehmerrechnern innerhalb eines vorgegebenen Zeitabschnitts für die Überlagerung heranzieht und/oder bereits für die Überlagerung herangezogene Datenpakete für weitere Überlagerungen nicht mehr heranzieht und insbesondere verwirft.

Zur Vermeidung von Übertragungsfehlern bei Ausfällen eines der Teilnehmerrechner kann vorgesehen sein, dass der empfangende Teilnehmerrechner ausschließlich Sprachdaten von Kommunikationsservern innerhalb eines vorgegebenen Zeitabschnitts für die Überlagerung heranzieht und/oder bereits für die Überlagerung herangezogene Sprachdaten für weitere Überlagerungen nicht mehr heranzieht und insbesondere verwirft.

Weiters löst die Erfindung die Aufgabe bei einem Sprachvermittlungssystem der eingangsgenannten Art mit den kennzeichnenden Merkmalen des Patentanspruches 7. Hierbei ist vorgesehen,

- dass der sendende Teilnehmerrechner eine Sprachaufzeichnungseinheit und eine Codierungseinheit aufweist, die die von der Sprachaufzeichnungseinheit erstellten Sprachinformationen in einzelne aufeinander folgende Sprachdatenwerte unterteilt, und Datenpakete erstellt, die jeweils zumindest einen Sprachdatenwert, insbesondere mehrere unmittelbar hintereinander aufgenommene Sprachdatenwerte, sowie einen den Sprachdatenwerten zugeordneten und von einem Zeitgeber erstellten Zeitstempel in Form einer fortlaufenden Zahl aufweisen, wobei der Zeitstempel die Reihenfolge der Sprachdatenwerte angibt,
- dass der sendende Teilnehmerrechner die Datenpakete an mit dem sendenden Teilnehmerrechner verbundene Kommunikationsserver übermittelt,
- dass die Kommunikationsserver jeweils weitere Datenpakete erstellen, denen jeweils zumindest ein vom sendenden Teilnehmerrechner übertragener Sprachdatenwert und zumindest ein, weiterer Zeitstempel zugeordnet sind, wobei der Wert des weiteren Zeitstempels dem Rest der Division des Zeitstempels geteilt durch eine vorgegebene positive ganze Zahl N entspricht, wobei N für sämtliche Kommunikationsserver gleich gewählt ist, und
- dass der empfangende Teilnehmerrechner ihm von den Kommunikationsservern übermittelte weitere Datenpakete empfängt und solche weiteren Datenpakete ermittelt, denen jeweils derselbe weitere Zeitstempel zugeordnet ist, und einen Sprachdatenwert durch Auswahl oder Summation der in den weiteren Datenpaketen enthaltenen Sprachdatenwerte mit jeweils gleichem weiteren Zeitstempel ermittelt und dem empfangenden Teilnehmer zur Verfügung hält.

Zur Vermeidung von Übertragungsfehlern bei Ausfällen eines der Kommunikationsserver ist vorgesehen, dass N wie folgt festgelegt ist:

$$N > (t_{delay,max} - t_{delay,min}) / t_{samp},$$

- wobei $t_{delay,max}$ die maximale Verzögerungszeit einer Verbindungsleitung zwischen einem sendenden oder empfangenden Teilnehmerrechner und einem Kommunikationsserver bezeichnet,
- wobei $t_{delay,min}$ die minimale Verzögerungszeit einer Verbindungsleitung zwischen einem sendenden oder empfangenden Teilnehmerrechner und einem Kommunikationsserver bezeichnet, und
- wobei $t_{samp}$ dem Inversen Abtastrate entspricht.

Werden die einzelnen Signale, die vom ersten Teilnehmerrechner herrühren, miteinander überlagert, so wird eine Auslöschung, die von unterschiedlichen Laufzeiteffekten unterschiedlicher Leitungen im Netzwerk herrührt wirksam vermieden.

Darüber hinaus ist es auch auf einfache Weise möglich, im Falle der Auswahl eines Datenpakets eines Kommunikationsservers bzw. der Priorisierung der Datenpakete eines Kommunikationsservers eine Umschaltung der Auswahl zu bewirken, ohne dass konkrete Artefakte auftreten. Wird eine Umschaltung, z.B. bei sehr schlechter Übertragungsqualität eines höher priorisierten Servers zu Gunsten eines niedriger priorisierten Servers vorgenommen, entstehen keine Artefakte. Dies ist insbesondere dann von Vorteil, wenn eine Umschaltung sehr häufig, z.B. mehrfach pro Sekunde auftritt.

Eine besonders einfache und mit handelsüblichen Sprachübermittlungs- und Konferenzsystemen kompatible Ausführungsform der Erfindung sieht vor,

- dass die sendenden Teilnehmer jeweils Sprachinformationen erstellen und diese Sprachinformationen vom jeweiligen sendenden Teilnehmerrechner in einzelne aufeinander folgende Sprachdatenwerte unterteilt werden,
- dass die sendenden Teilnehmerrechner jeweils über ein eine Sprachaufzeichnungseinheit und eine Codierungseinheit verfügen, die die von der Sprachaufzeichnungseinheit erstellten Sprachinformationen in einzelne aufeinander folgende Sprachdatenwerte unterteilt, und Datenpakete erstellt, die jeweils die Sprachdatenwerte sowie einen den Sprachdatenwerten zugeordneten und von einem Zeitgeber erstellten Zeitstempel in Form einer fortlaufenden Zahl aufweisen, wobei der Zeitstempel die Reihenfolge der Sprachdatenwerte zu den Sprachdatenwerten von anderen vom selben Teilnehmerrechner erstellten Datenpaketen angibt,
- dass die sendenden Teilnehmerrechner die von ihnen erstellten Datenpakete an die mit dem jeweiligen sendenden Teilnehmerrechner verbundenen Kommunikationsserver übermitteln,
- dass die Kommunikationsserver ihnen jeweils von den sendenden Teilnehmerrechnern übermittelte Datenpakete empfangen und die in den Datenpaketen enthaltenen Sprachdatenwerte in einem Speicher abspeichern und die einzelnen Sprachdatenwerte jeweils mit einem weiteren Zeitstempel verknüpft abspeichern, der dem Rest der Division des Zeitstempels geteilt durch eine vorgegebene positive ganze Zahl N entspricht,
- dass die Kommunikationsserver weitere Datenpakete erstellen, denen jeweils zumindest ein weiterer Zeitstempel zugeordnet wird und denen jeweils, insbesondere durch Überlagerung aus den Sprachdatenwerten, die mit dem gleichen weiteren Zeitstempel verknüpft sind, ermittelte, Sprachdatenwerte zugeordnet werden und
- dass der empfangende Teilnehmerrechner sämtliche ihm von den Kommunikationsservern übermittelte Datenpakete, denen jeweils derselbe Zeitstempel zugeordnet ist, überlagert oder aus den übermittelten Datenpaketen, denen derselbe Zeitstempel zugeordnet ist, ein Datenpaket auswählt und dem zweiten Teilnehmer zur Verfügung stellt.

Eine vorteilhafte Festlegung, mit der vermieden wird, dass zu unterschiedlichen Zeitpunkten erstellte Sprachdaten desselben sendenden Teilnehmers überlagert werden, sieht vor, dass jedes Datenpaket jeweils Sprachdaten in Form eines einzelnen Abtastwerts zugewiesen sind und dass die Überlagerungseinheiten der Kommunikationsserver oder der Teilnehmerrechner jeweils überlagerte als Summen der bei ihnen einlangenden Sprachdaten bilden.

Zur Vermeidung von Übertragungsfehlern bei Ausfällen eines der Teilnehmerrechner kann vorgesehen sein, dass der Kommunikationsserver ausschließlich Sprachdaten von sendenden Teilnehmerrechnern innerhalb eines vorgegebenen Zeitabschnitts für die Überlagerung heranzieht und/oder bereits für die Überlagerung herangezogene Sprachdaten für weitere Überlagerungen nicht mehr heranzieht und insbesondere verwirft.

Weiters kann vorgesehen sein, dass der empfangende Teilnehmerrechner ausschließlich Sprachdaten von Kommunikationsservern innerhalb eines vorgegebenen Zeitabschnitts für die Überlagerung heranzieht und/oder bereits für die Überlagerung herangezogene Sprachdaten für weitere Überlagerungen nicht mehr heranzieht und insbesondere verwirft.

Besonders vorteilhaft kann ein Computerprogramm zur Ausführung eines erfindungsgemäßen Verfahrens auf einem Kommunikationsserver oder ein Computerprogramm zur Ausführung eines erfindungsgemäßen Verfahrens durch einen Teilnehmerrechner auf einem Datenträger abgespeichert sein.

Die Erfindung wird anhand eines bevorzugten Ausführungsbeispiels ohne Einschränkung der Allgemeinheit näher dargestellt. **Fig. 1** zeigt ein Beispiel eines Sprachkommunikationssystems wie aus dem Stand der Technik bekannt. **Fig. 2a** und **Fig. 2b** zeigen die Übertragungswege der redundanten Sprachsignale basierend am Stand der Technik mit den bestehenden Nachteile. **Fig. 3a** und **Fig. 3b** zeigen eine erfindungsgemäß in einem Server vorgenommene Kompensation der Verzögerung der einzelnen Sprachsignale. **Fig. 4** zeigt das Beispiel eines Sprachkommunikationssystems mit den auftretenden Verzögerungen der Sprachsignale. **Fig. 5** zeigt ein Ausführungsbeispiel für den Empfang der Datenpakete in den Kommunikationsservern. **Fig. 6a bis 6c** zeigen ein Ausführungsbeispiel für die Verarbeitung der Datenpakete im Kommunikationsserver. **Fig. 7a bis 7c** zeigen das zugehörige Vorgehen im empfangenden Teilnehmerrechner.

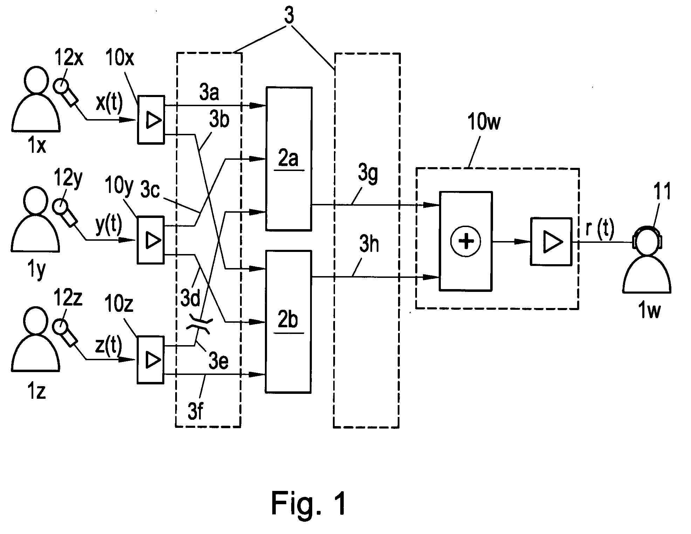

Wie bereits erwähnt besteht im Stand der Technik, dargestellt in **Fig. 1**, ein Sprachkommunikationssystem, das vier Teilnehmer 1x, 1y, 1z, 1w mit jeweils einem Teilnehmerrechner 10x, 10y, 10z, 10w und zwei Kommunikationsserver 2a, 2b aufweist. Die einzelnen Teilnehmerrechner 10x, 10y, 10z, 10w sind über ein Netzwerk 3 umfassend eine Anzahl von Verbindungsleitungen 3a, 3b, 3c, 3d, 3e, 3f, 3g, 3h miteinander verbunden. Die sendenden Teilnehmerrechner 10x, 10y, 10z verfügen über eine Sprachabgabeeinheit, mit der die von ihm überlagerten einzelnen Sprachdaten in der durch die Zeitstempel τ oder weiterer Zeitstempel τ' definierten Reihenfolge sowie durch die Reihenfolge des Einlangens abgegeben werden.

Die Sprachdaten der sendenden Teilnehmer 1x, 1y, 1z werden von je einer Sprachaufzeichnungseinheit in Form eines Mikrofons 12x, 12y, 12z erstellt. Die sendenden Teilnehmerrechner 10x, 10y, 10z weisen jeweils eine nicht dargestellte Codierungseinheit auf, die ausgehend von den bei ihr von den Mikrofonen 12x, 12y, 12z einlangenden Signalen Sprachdatenwerte x, y, z erstellt. Der empfangende Teilnehmerrechner 10w verfügt über eine Sprachabgabeeinheit 11 in Form von Kopfhörern, alternativ können auch Lautsprecher verwendet werden.

Im vorliegenden Ausführungsbeispiel wird dargestellt, wie die einzelnen von den sendenden Teilnehmern 1x, 1y, 1z abgegebene Sprachinformationen auf den empfangenden Teilnehmer 1w übertragen werden. Auch wenn hier nur ein Kommunikationsweg von den sendenden Teilnehmern 1x, 1y, 1z zum empfangenden Teilnehmer 1w dargestellt ist, ist es selbstverständlich auch möglich, dass jeder der Teilnehmer 1x, 1y, 1z, 1w jeweils die einander überlagernden Sprachmitteilungen aller übrigen Teilnehmer 1x, 1y, 1z, 1w übermittelt erhält. Im Zuge einer Konferenzschaltung werden somit die Sprachinformationen sämtlicher Teilnehmer 1x, 1y, 1z, 1w an sämtliche anderen Teilnehmer 1x, 1y, 1z, 1w übertragen.

Damit Störungen in einzelnen Leitungen oder der Ausfall eines Kommunikationsservers nicht zu Unterbrechungen oder zum Abschneiden einzelner Teilnehmer 1x, 1y, 1z, 1w von der Kommunikation mit den übrigen Teilnehmern 1x, 1y, 1z, 1w führen, sind zwei identisch aufgebaute redundante Kommunikationsserver 2a, 2b vorgesehen, wobei allenfalls auch noch mehr Kommunikationsserver vorgesehen sein können.

Wie als Beispiel in **Fig. 1** dargestellt, ist eine Verbindungsleitung 3e unterbrochen, sodass das vom sendenden Teilnehmer 1z abgegebene Signal nicht beim Kommunikationsserver 2a einlangt. Aufgrund der redundanten Ausführung der Kommunikationsserver 2a, 2b ist es jedoch möglich, das Sprachsignal von sendenden Teilnehmer 1z über die Verbindungsleitung 3f und den Kommunikationsserver 2b an den empfangenden Teilnehmer 1w zu übertragen. Ein solches Vorgehen ist aus dem Stand der Technik grundsätzlich bekannt. Mit der redundanten Ausführung der einzelnen Kommunikationsserver 2a, 2b sowie mit der Verwendung unterschiedlicher Verbindungsleitungen 3a bis 3h geht jedoch der eingangs beschriebene Nachteil einher, dass aufgrund unterschiedlicher Leitungsverzögerungen Sprachsignale einzelner sendender Teilnehmer 1x, 1y, 1z bei den Kommunikationsservern 2a, 2b zu unterschiedlichen Zeitpunkten ankommen. Die Kommunikationsserver 2a, 2b erhalten und überlagern die von den sendenden Teilnehmern 1x, 1 y, 1z abgegebenen Signale jeweils mit einem bestimmten Zeitversatz und leiten diese derart gemischten Sprachkommunikationssignale über die Datenleitungen 3g und 3h an den empfangenden Teilnehmer 1w weiter. Aufgrund der unterschiedlichen Zeitverzögerungen über die Leitungen 3a, 3b, 3c, 3d, 3e, 3f sowie die unterschiedlichen Zeitverzögerungen über die Leitungen 3g, 3h werden einzelne übertragene Sprachinformationen mehrfach über unterschiedliche Leitungen jeweils mit unterschiedlichem Zeitversatz an den empfangenden Teilnehmer 1 w übertragen.

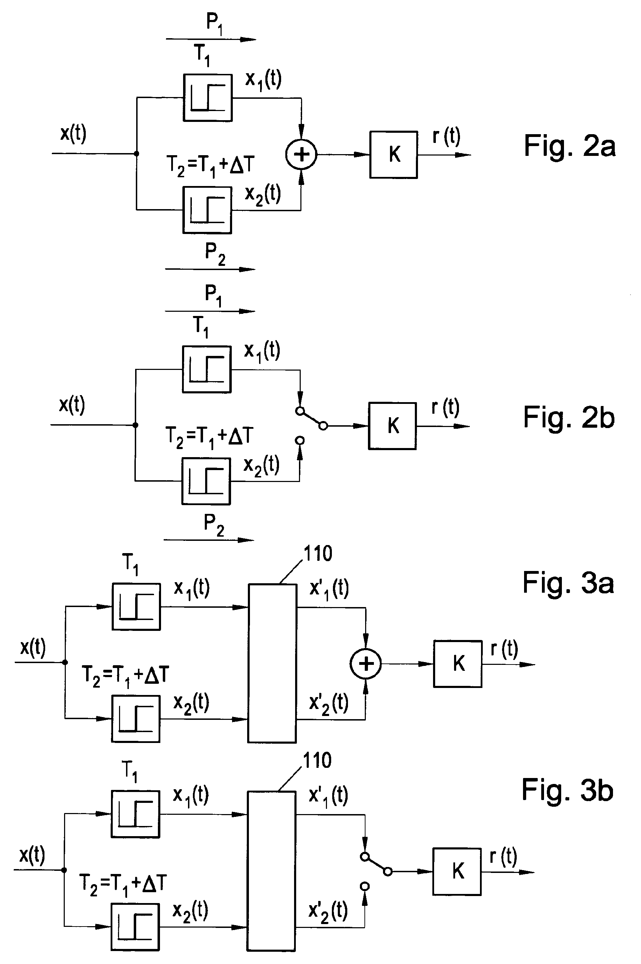

In Fig. 2a und Fig. 2b sind die Blockdiagramme eines Kommunikationssystems mit zwei redundanten Datenpfaden P1, P2 zwischen dem sendenden Teilnehmer 1x und dem empfangenden Teilnehmer 1w näher dargestellt, wobei der obere Pfad P1 die Datenleitungen 3a und 3g, der untere Pfad P2 die Datenleitungen 3b und 3h aufweist. Die Sprachdaten x(t) werden über die Pfade geleitet, wobei jeder Pfad P1, P2 mit einer bestimmten vorgegebenen Gesamtzeitverzögerung T1, T2 behaftet ist. Wie auch in Fig. 1 dargestellt, bestehen nun für die Übertagung von Sprachdatensignalen von einem Teilnehmer zu einem anderen Teilnehmer 1w mitunter unterschiedliche Datenpfade P1, P2. In Fig. 1 beispielsweise können Daten vom sendenden Teilnehmer 1 x, 1 y, 1 z zum empfangenden Teilnehmer 1w einerseits über die Leitungen 3a und 3g für den Teilnehmer 1x, die Leitungen 3c und 3g für den Teilnehmer 1y und die Leitungen 3e und 3g für den Teilnehmer 1 z und andererseits über die Leitungen 3b und 3h für den Teilnehmer 1x, die Leitungen 3d und 3h für den Teilnehmer 1y und die Leitungen 3f und 3h für den Teilnehmer 1z übertragen werden. Beide Pfade P1, P2 haben dabei eine unterschiedliche Zeitverzögerung, der erste Pfad P1 hat eine Zeitverzögerung T1, der zweite Pfad P2 hat eine Zeitverzögerung T2 = T1 + $\Delta$T, die um einen Zeitversatz $\Delta$T größer ist als die Zeitverzögerung T1. Beim empfangenden Teilnehmer können diese beiden über die separaten Pfade P1, P2 übermittelten Sprachdateninformationen x1 (t), x2(t) addiert werden (Fig. 2a), in einem Verstärker K verstärkt und dem jeweiligen empfangenden Teilnehmer übermittelt, beispielsweise über einen Lautsprecher ausgegeben und dem empfangenden Teilnehmer 1w vorgespielt. Hierbei ergibt sich der eingangs beschriebene unangenehme Überlagerungs- bzw. Auslöschungseffekt, aufgrund des unterschiedlichen Zeitversatzes T1, T2 über zwei separate Pfade P1, P2 im Netzwerk. Bei Auftreten von Fehlern kann es erforderlich sein, zwischen den einzelnen Pfaden umzuschalten. Bei einer Umschaltung zwischen den Pfaden P1 und P2 ergeben (Fig. 2b) sich Störungen in Form von Artefakten, die sich negativ auf die Übertragungsqualität auswirken.

Aus dem Stand der Technik ist, wie in **Fig. 3a** und **Fig. 3b** dargestellt eine Methode bekannt, bei beim empfangenden Teilnehmerrechner 10w, das heißt beim Rechner des empfangenden Teilnehmers 1w, eine Kompensationseinheit 110 vorgesehen ist, die mittels Korrelation ermittelt, ob die Signale x$_1$, x$_2$ korreliert sind und falls ja, mit welcher Zeitverzögerung $\Delta$T die beiden überlagerten Teilsignale x$_1$(t), x$_2$(t) beim Empfängerteilnehmer ankommen. Ist diese Zeitverzögerung $\Delta$T bekannt, kann das jeweilige Signal kompensiert werden. Hierbei erhält man die kompensierte Signale x'$_1$(t), x'$_2$(t). Diese können addiert werden (Fig. 3a), die erhaltene Summe wird von einem Verstärker K verstärkt. Als Ergebnis erhält man ein Resultat r(t), bei dem keine Auslöschungen zu hören sind. Eine solche Kompensation ist jedoch relativ ressourcenaufwendig und kann nur mit größerem Aufwand in Echtzeit durchgeführt werden. Bei einer Umschaltung zwischen den Pfaden P1 und P2 (Fig. 3b) ergeben sich keine Störungen in Form von Artefakten.

Eine derartige Kompensation ist jedoch bei dem in **Fig. 1** dargestellten Netzwerk nicht mehr möglich, da die Signale x, y, z der sendenden Teilnehmer 1x, 1 y, 1z bereits in den Servern 2a, 2b überlagert wurden und unterschiedliche Verzögerungen in den einzelnen bereits einander überlagerten Signalen bestehen.

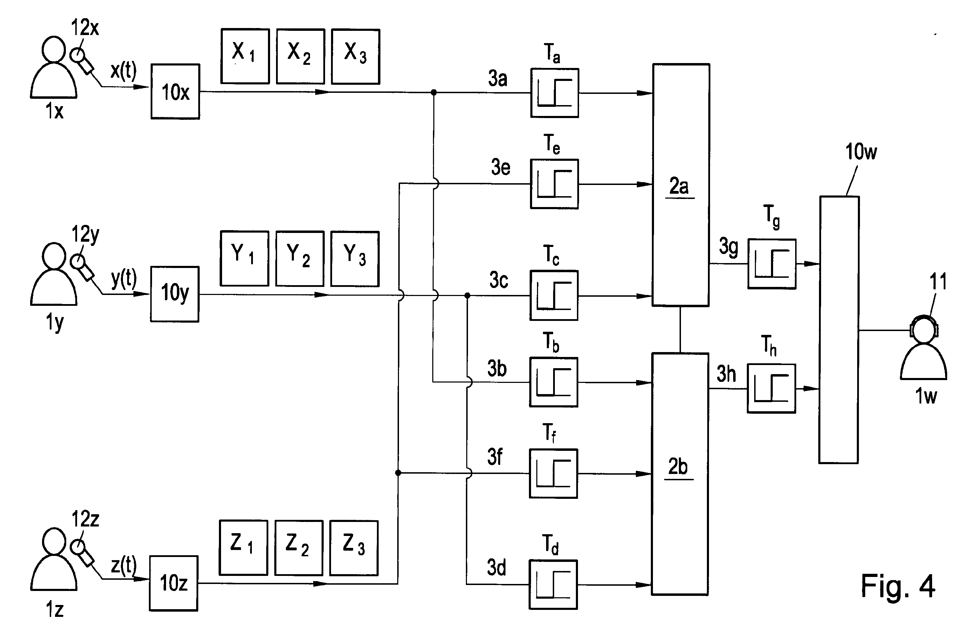

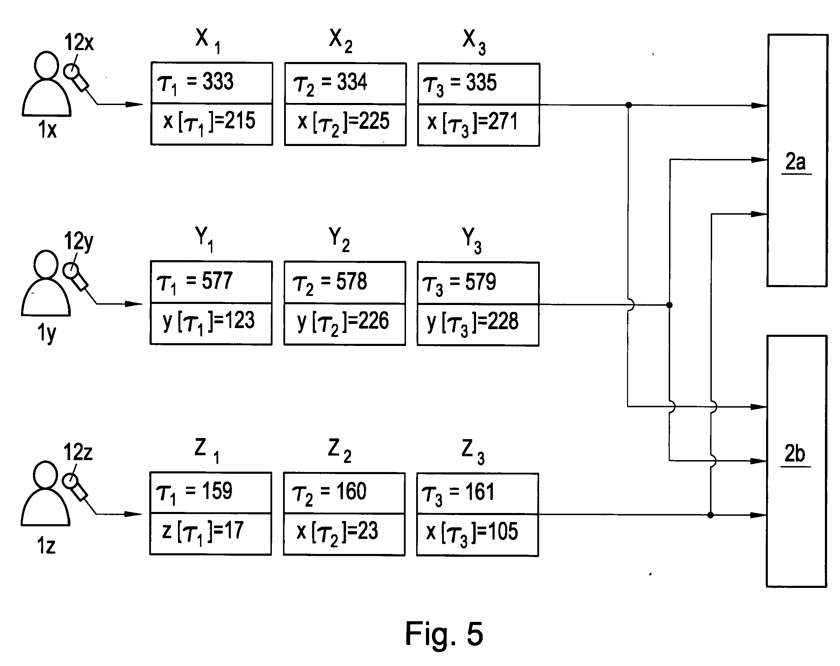

In **Fig. 4** ist das Vorgehen bei einem Ausführungsbeispiel der Erfindung näher dargestellt. Jeder sendende Teilnehmer 1x, 1y, 1z erstellt über ein seinem Teilnehmerrechner 10x, 10y, 10z zugeordnetes Mikrofon 12a, 12b, 12c jeweils Sprachinformation x(t), y(t), z(t). Diese Sprachinformation x(t), y(t), z(t) wird vom jeweiligen sendenden Teilnehmerrechner 10x, 10y, 10z in einzelne aufeinander folgende Sprachdaten x$_1$ ... x$_n$, y$_1$ ... y$_n$,, z$_1$ ... z$_n$, unterteilt. Im vorliegenden Fall handelt es sich bei den Sprachdaten um Abtastwerte x(t$_1$), x(t$_2$), ... x(t$_n$), die zu einzelnen, äquidistanten Abtastzeitpunkten t$_1$ ... t$_n$ aufgenommen werden. Jeder Abtastzeitpunkt t$_1$ ... t$_n$ wird mit einem fortlaufenden Zeitstempel $\tau_1$, ... $\tau_n$ versehen, wobei die diskretisierten Abtastwerte im Folgenden als x[$\tau_1$] = x(t$_1$) bezeichnet werden. Diese Abtastwerte x(t$_1$), x(t$_2$), ... x(t$_n$) werden mit ihren jeweils zugeordneten Zeitstempel $\tau_1$, $\tau_2$, ... $\tau_n$ zu Datenpaketen X$_1$ ... X$_n$, Y$_1$ ... Y$_n$, Z$_1$ ... Z$_n$ zusammengefasst (**Fig. 5**). Jedes Datenpaket X$_1$ ... X$_n$, Y$_1$ ... Y$_n$, Z$_1$ ... Z$_n$ umfasst jeweils zumindest einen Abtastwert x[$\tau_1$], y[$\tau_1$], z[$\tau_1$] sowie einen Zeitstempel $\tau_1$, der im vorliegenden Fall vom sendenden Teilnehmerrechner 10x, 10y, 10z erstellt wird und in Form einer fortlaufenden ganzen Zahl $\tau_1$, ... $\tau_n$ vergeben wird. Es ist auch möglich, dass ein Datenpaket X$_1$ ... X$_n$, Y$_1$ ... Y$_n$, Z$_1$ ... Z$_n$ mehrere Abtastwerte enthält, solange die zeitliche Aufeinanderfolge aller Abtastwerte x, y, z zumindest implizit feststellbar ist. So können beispielsweise mehrere Abtastwerte x, y, z, die mit bekannter Abtastrate ermittelt wurden, in einem gemeinsamen Datenpaket X$_1$ ... X$_n$, Y$_1$ ... Y$_n$, Z$_1$ ... Z$_n$ übertragen werden, wobei lediglich der Abtastzeitpunkt t$_1$ des ersten Abtastwertes angegeben wird und Abtastzeitpunkte t$_2$, ... t$_n$ der übrigen Abtastwerte bei Kenntnis der Abtastfrequenz ermittelbar sind. Zu jedem Abtastzeitpunkt t$_1$, ... t$_n$ oder bei der Erstellung des jeweils ersten Abtastwertes des Datenpaketes wird dabei ein Zähler um einen vorgegebenen Wert, insbesondere 1, erhöht und als Zeitstempel verwendet. Der Zeitstempel $\tau_1$, ... $\tau_n$ entspricht

dem jeweiligen Zählerwert zum Aufnahmezeitpunkt $t_1$, ... $t_n$, das heißt einer ganzen Zahl, die dem Zeitpunkt zur Abtastung bzw. Erkennung des jeweiligen Abtastwertes entspricht.

Die Zeitstempel $\tau_1$, ... $\tau_n$ sind zwischen den einzelnen Teilnehmerrechnern 10x, 10y, 10z nicht synchronisiert und haben unterschiedliche Werte. Die Abtastrate ist jedoch bei allen sendenden Teilnehmerrechnern 10x, 10y, 10z dieselbe.

Die so erstellten Datenpakete $X_1$ ... $X_n$, $Y_1$ ... $Y_n$, $Z_1$ ... $Z_n$ jedes sendenden Teilnehmerrechners 10x, 10y, 10z werden an die mit den sendenden Teilnehmerrechner 10x, 10y, 10z verbundenen Kommunikationsserver 2a, 2b übermittelt. Jede Kommunikationsleitung 3a, 3b, 3c, 3d, 3e, 3f weist dabei eine unterschiedliche Verzögerungszeit $T_a$, ... $T_f$ auf, sodass die einzelnen von den sendenden Teilnehmerrechnern 10x, 10y, 10z erstellten Datenpakete $X_1$ ... $X_n$, $Y_1$ ... $Y_n$, $Z_1$ ... $Z_n$ zu jeweils unterschiedlichen Zeitpunkten bei den Kommunikationsservern 2a, 2b einlangen **(Fig. 4)**. Auch die Kommunikationsleitungen 3g, 3h zwischen den Kommunikationsservern 2a, 2b und dem empfangenden Teilnehmerrechner 10x weisen unterschiedliche Verzögerungszeiten 3g, 3h auf. Jeder der sendenden Teilnehmer 1x, 1y, 1z übermittelt an die Kommunikationsserver 2a, 2b die Datenpakete $X_1$ ... $X_n$, $Y_1$ ... $Y_n$, $Z_1$ ... $Z_n$, die neben den Sprachinformationen auch jeweils einen Zeitstempel $\tau$ aufweisen, der den jeweiligen Zeitpunkt t der Erstellung der jeweiligen Sprachinformation angibt, sodass insgesamt die Reihenfolge der Erstellung der Sprachinformationen für die einzelnen Kommunikationsserver 2a, 2b bekannt ist. Jeder der Kommunikationsserver 2a, 2b ermittelt für jedes bei ihm einlangende Datenpaket $X_1$ ... $X_n$, $Y_1$ ... $Y_n$, $Z_1$ ... $Z_n$ eines sendenden Teilnehmerrechners 10x, 10y, 10z jeweils den Rest der Division des Zeitstempels $\tau$ geteilt durch eine vorgegebene positive ganze Zahl N. Der Divisionsrest wird im Folgenden kurz $\tau\%N$ bezeichnet. Diese Zahl N ist für sämtliche Kommunikationsserver 2a, 2b dieselbe. In dieser bevorzugten Form der Ausführungsform der Erfindung wird N auf einen Wert festgelegt, für den gilt:

$$N > (t_{delay,max} - t_{delay,min}) / t_{samp},$$

Im vorliegenden Ausführungsbeispiel beträgt die Abtastrate 16 kHz, sodass die Anzahl der Abtastwerte pro Zeit 16000 ist. In jedem Datenpaket $X_1$ ... $X_n$, $Y_1$ ... $Y_n$, $Z_1$ ... $Z_n$ sind je 80 Abtastwerte enthalten, sodass pro Sekunde 200 Datenpakete $X_1$ ... $X_n$, $Y_1$ ... $Y_n$, $Z_1$ ... $Z_n$ von jedem sendenden Teilnehmer erstellt werden. Die Sampling-Zeit $t_{samp}$ entspricht der Inversen Anzahl der Abtastfrequenz und Aufgrund der Leitungsverzögerungen im Übertragungsnetzwerk 3 ergeben sich unterschiedliche maximale Verzögerungszeiten, die für die Bestimmung der Zahl N berücksichtigt werden. N ist konstant und wird offline auf Grund der zu erwartenden minimalen und maximalen Verzögerungszeiten bestimmt. Die Zeitspanne $t_{delay,max}$ gibt die maximale Verzögerungszeit unter den Verbindungsleitungen 3a - 3h zwischen einem sendenden Teilnehmerrechner 10x, 10y, 10z, 10w und einem Kommunikationsserver 2a, 2b. Die Zeitspanne $t_{delay,min}$ gibt die minimale Verzögerungszeit unter den Verbindungsleitungen 3a - 3h zwischen einem Teilnehmerrechner 10x, 10y, 10z, 10w und einem Kommunikationsserver 2a, 2b. Im vorliegenden Ausführungsbeispiel wird N als kleinste ganze Zahl festgesetzt, die die vorstehende Ungleichung erfüllt. Für eine einfache Darstellung wird im vorliegenden Ausführungsbeispiel N auf den Wert 8 gesetzt.

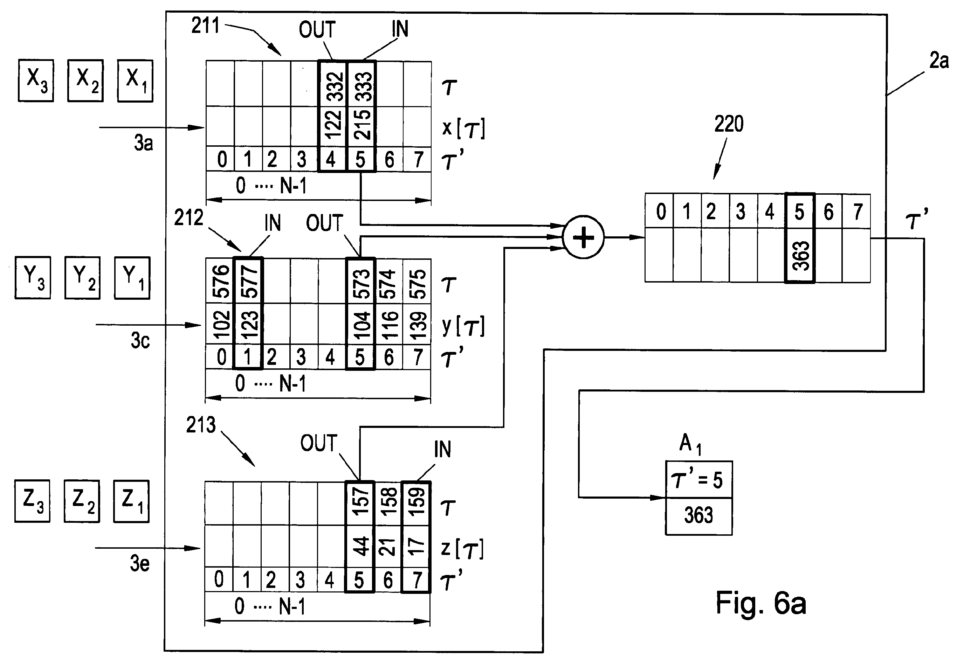

Wie in **Fig. 6a** bis **6c** dargestellt, werden die einzelnen Datenpakete $X_1$ ... $X_n$, $Y_1$ ... $Y_n$, $Z_1$ ... $Z_n$, die bei jedem Kommunikationsserver 2a, 2b einlangen, in einem Speicher 211, 212, 213 abgelegt, der jeweils N Speicherplätze für jeden der mit dem Kommunikationsserver 2a, 2b verbundenen sendenden Teilnehmerrechner 10x, 10y, 10z aufweist. Für jeden der Zeitstempel $\tau$ in einem Datenpaket $X_1$ ... $X_n$, $Y_1$ ... $Y_n$, $Z_1$ ... $Z_n$ wird jeweils ein weiterer Zeitstempel $\tau' = \tau\%N$ ermittelt, der den Rest der Division des Zeitstempels $\tau$ geteilt durch die Zahl N entspricht. Die im Datenpaket $X_1$ ... $X_n$, $Y_1$ ... $Y_n$, $Z_1$ ... $Z_n$ enthaltenen Sprachinformationen $x[\tau]$, $y[\tau]$, $z[\tau]$ werden im Speicher 211, 212, 213 des jeweiligen Kommunikationsservers 2a, 2b im Speicherplatz, der dem jeweiligen sendenden Teilnehmerrechner 10x, 10y, 10z sowie dem jeweiligen weiteren Zeitstempel $\tau'$ entspricht abgespeichert.

Nachdem sämtliche sendenden Teilnehmer 1x, 1y, 1z an den Kommunikationsserver 2a, 2b jeweils Sprachdaten mit einem Zeitstempel $\tau$ übermittelt haben, überlagert dieser die Sprachdaten zu einem überlagerten Sprachdatenwert und übermittelt ein Sprachdaten enthaltendes Datenpaket $A_1$, ... $A_n$, $B_1$, ... $B_n$ an den mit ihm verbundenen empfangenden Teilnehmerrechner 10w. Im vorliegenden Fall sind überlagerte Sprachdatenwerte als Summe der einlangenden Sprachdaten ermittelt. Sämtliche bei den Kommunikationsservern 2a, 2b einlangenden Sprachdaten $x$, $y_1$ $z$ werden einem weiteren Datenpaket $A_1$, ... $A_n$, $B_1$ ... $B_n$ zugeordnet und dem empfangenden Teilnehmer 1w übermittelt. Die Server 2a, 2b führen jeweils die im Folgenden dargestellten Schritte aus und agieren dabei unabhängig voneinander.

In **Fig. 6a** ist die Überlagerung der Sprachsignale zu einem ersten Zeitpunkt beim ersten Kommunikationsserver 2a dargestellt. Beim ersten Kommunikationsserver 2a langen die Datenpakete $X_1$, $Y_1$, $Z_1$, ein. Es wird jeweils der Divisionsrest der Division des übermittelten Zeitstempels $\tau_1$ durch N ermittelt und die Sprachdatenwerte $x_1[\tau_1]$, $y_1[\tau_1]$ und $z_1[\tau_1]$ werden an die betreffenden Stellen in einem hierfür vorgesehenen Speicher 211, 212, 213 geschrieben. Die jeweils beschriebenen Speicherpositionen sind mit IN markiert. Der Kommunikationsserver 2a stellt einen Index OUT bereit, der mit jedem Verabreitungsschritt inkrementiert wird und bei Überschreiten der Speichergröße wieder auf den Wert 0 zurückgesetzt wird. Im Beispiel werden sämtliche Werte in den Speichern 211, 212, 213, die an der Speicherposition $\tau' = 5$ abgespeichert sind, überlagert und in einen weiteren Speicher 220 an der Position $\tau' = 5$ abgespeichert. Durch Überlagerung ergibt sich der Wert a[OUT] = x[OUT]+y[OUT]+z[OUT] = 215 + 104 + 44 = 363. Am Ausgang des Kommunikationsservers 2a liegt ein Datenpaket $A_1$ an, das den Wert des Index OUT = 5 als Zeitstempel $\tau$ sowie den Überlagerungswert 363 enthält. Ebenso erstellt der zweite Kommunikationsserver 2b unabhängig von Kommunikationsserver 2a Datenpakete $B_1$, $B_2$, $B_3$ und übermittelt diese an den empfangenden Teilnehmerrechner 10w.

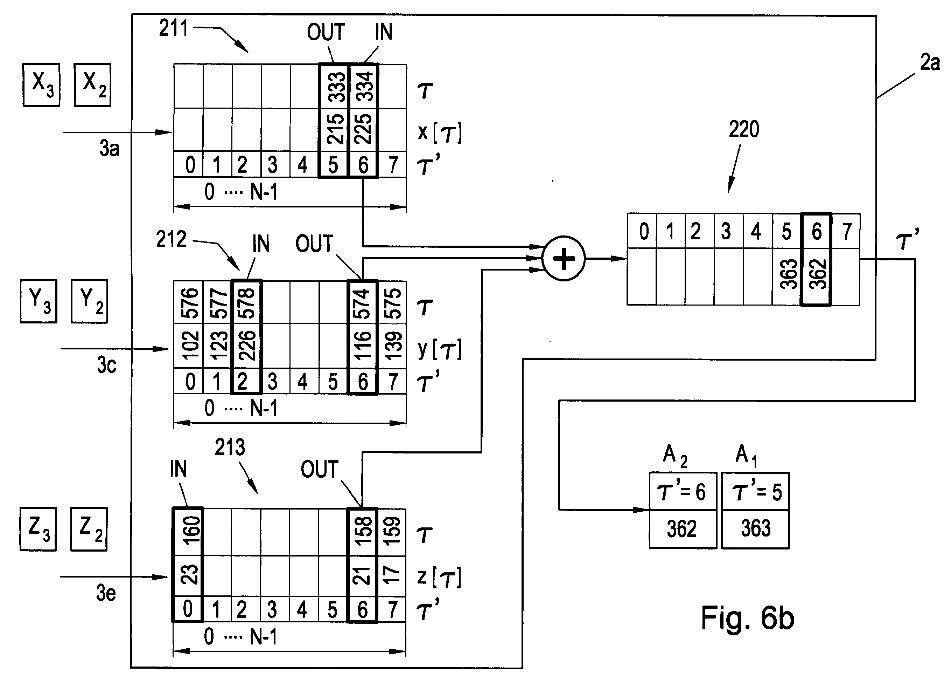

In **Fig. 6b** ist die Überlagerung der Sprachsignale x, y, z zu einem zweiten Zeitpunkt beim ersten Kommunikationsserver 2a dargestellt. Beim ersten Kommunikationsserver 2a langen die Datenpakete $X_2$, $Y_2$, $Z_2$, ein. Es wird jeweils der Divisionsrest der Division des übermittelten Zeitstempels $\tau_1$ durch N ermittelt und die Sprachdatenwerte $x_2[\tau_2]$, $y_2[\tau_2]$ und $z_2[\tau_2]$ werden an die betreffenden Stellen in einem hierfür vorgesehenen Speicher 211, 212, 213 geschrieben. Die jeweils beschriebenen Speicherpositionen sind mit IN markiert. Im Server 2a erhöht den Index OUT, der nunmehr den Wert OUT = 6 aufweist. Sämtliche Werte in den Speichern 211, 212, 213, die an der Speicherposition $\tau' = 6$ abgespeichert sind, werden überlagert und in einen weiteren Speicher 220 an der Position $\tau' = 6$ abgespeichert. Durch Überlagerung ergibt sich der Wert a[OUT] = x[OUT]+y[OUT]+z[OUT] = 225 + 116 + 21 = 362. Am Ausgang des Kommunikationsservers 2a liegt ein Datenpaket $A_2$ an, das den Wert des Index OUT = 6 als Zeitstempel $\tau$ sowie den Überlagerungswert 362 enthält. Ebenso erstellt der zweite Kommunikationsserver 2b unabhängig von Kommunikationsserver 2a Datenpakete $B_1$, $B_2$, $B_3$ und übermittelt diese an den empfangenden Teilnehmerrechner 10w.

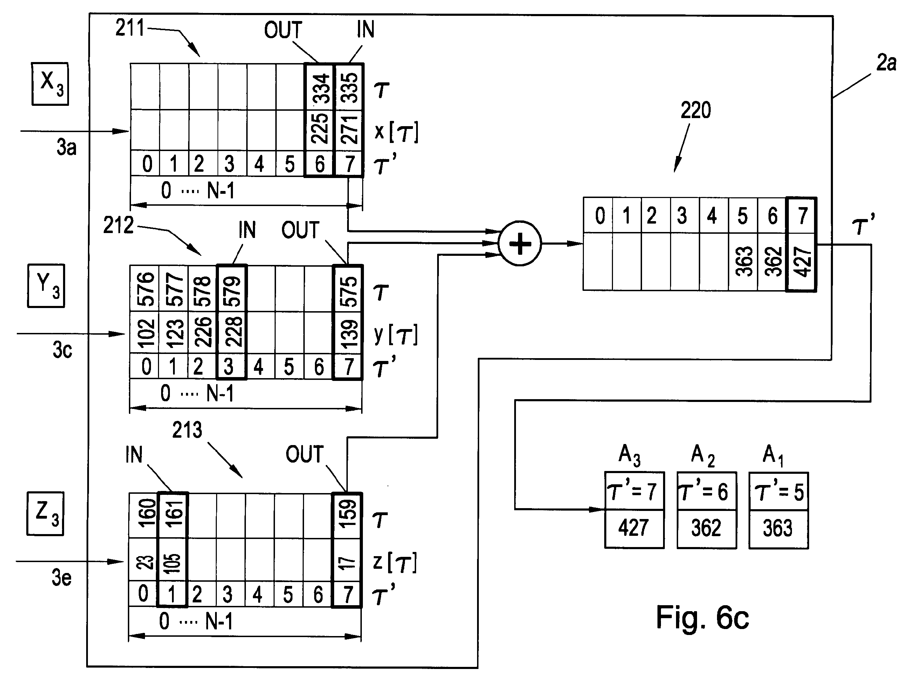

In **Fig. 6c** ist die Überlagerung der Sprachsignale x, y, z zu einem dritten Zeitpunkt beim ersten Kommunikationsserver 2a dargestellt. Beim ersten Kommunikationsserver 2a langen die Datenpakete $X_3$, $Y_3$, $Z_3$, ein. Es wird jeweils der Divisionsrest der Division des übermittelten Zeitstempels $\tau_1$ durch N ermittelt und die Sprachdatenwerte $x_3[\tau_3]$, $y_3[\tau_3]$ und $z_3[\tau_3]$ werden an die betreffenden Stellen in einem vorgesehenen Speicher 211, 212, 213 geschrieben. Die jeweils beschriebenen Speicherpositionen sind mit IN markiert. Im Server 2a erhöht den Index OUT, der nunmehr den Wert OUT = 7 aufweist.. Sämtliche Werte in den Speichern 211, 212, 213, die an der Speicherposition $\tau' = 7$ abgespeichert sind, werden überlagert und in einen weiteren Speicher 220 an der Position $\tau' = 7$ abgespeichert. Durch Überlagerung ergibt sich der Wert a[OUT] = x[OUT]+y[OUT]+z[OUT] = 17 + 139 + 271 = 427. Am Ausgang des Kommunikationsservers 2a liegt ein Datenpaket $A_3$ an, das den Wert des Index OUT =7 als Zeitstempel $\tau$ sowie den Überlagerungswert 427 enthält. Ebenso erstellt der zweite Kommunikationsserver 2b unabhängig von Kommunikationsserver 2a Datenpakete $B_1$, $B_2$, $B_3$ und übermittelt diese an den empfangenden Teilnehmerrechner 10w.

Der empfangende Teilnehmerrechner 10w ist seinerseits mit den Kommunikationsservern 2a, 2b verbunden und erhalten jeweils Datenpakete A, B, denen ein Zeitstempel $\tau'$ und Sprachdaten a, b zugeordnet sind. Wie auch der Kommunikationsserver 2a, 2b überlagert der jeweilige Teilnehmerrechner 10w sämtliche ihm zugehende Sprachdaten aus ihm übermittelten Datenpaketen $A_1$, $A_2$, $A_3$, $B_1$, $B_2$, $B_3$, denen jeweils derselbe Zeitstempel $\tau'$ zugeordnet ist. Wie auch bei den Kommunikationsservern 2a, 2b kann zur Überlagerung der Sprachdaten a, b bei den empfangenden Teilnehmerrechnern 10w jeweils eine Addition herangezogen werden.

Auch der empfangende Teilnehmerrechner 10w verfügt über Speicher 111, 112, in dem für sämtliche mit ihm verbundene Kommunikationsserver 2a, 2b sowie für sämtliche Werte 0 ... N-1 jeweils ein Speicherplatz zur Verfügung steht. Die einzelnen in den Datenpaketen $A_1$, $A_2$, $A_3$, $B_1$, $B_2$, $B_3$ enthaltenen Sprachdaten werden im Speicher 111, 112 an derjenigen Stelle abgelegt, der durch einen dem jeweiligen Kommunikationsserver 2a, 2b zugeordneten Index sowie den dem jeweiligen Datenpaket $A_1$, $A_2$, $A_3$, $B_1$, $B_2$, $B_3$ zugeordneten Zeitstempel $\tau'$ bezeichnet wird. Sofern für einen Zeitstempel $\tau'$ Sprachinformationen von sämtlichen Teilnehmern zur Verfügung stehen oder eine vorgegebene Time-out Zeitspanne abgelaufen ist, werden die überlagerten Sprachdaten an den jeweiligen empfangenden Teilnehmer 10w übertragen, beispielsweise über einen Lautsprecher ausgegeben. Um zu vermeiden, dass der empfangende Teilnehmerrechner 10w ausschließlich diejenigen Sprachdaten von Kommunikationsservern 2a, 2b innerhalb eines vorgegebenen Zeitabschnitte für die Überlagerung heranzieht, die im vorgegebenen Zeitabschnitt erstellt worden sind, werden einmal für die Überlagerung herangezogene Sprachdaten $a[\tau]$, $b[\tau]$ für weitere Überlagerungen nicht mehr herangezogen und folglich verworfen.

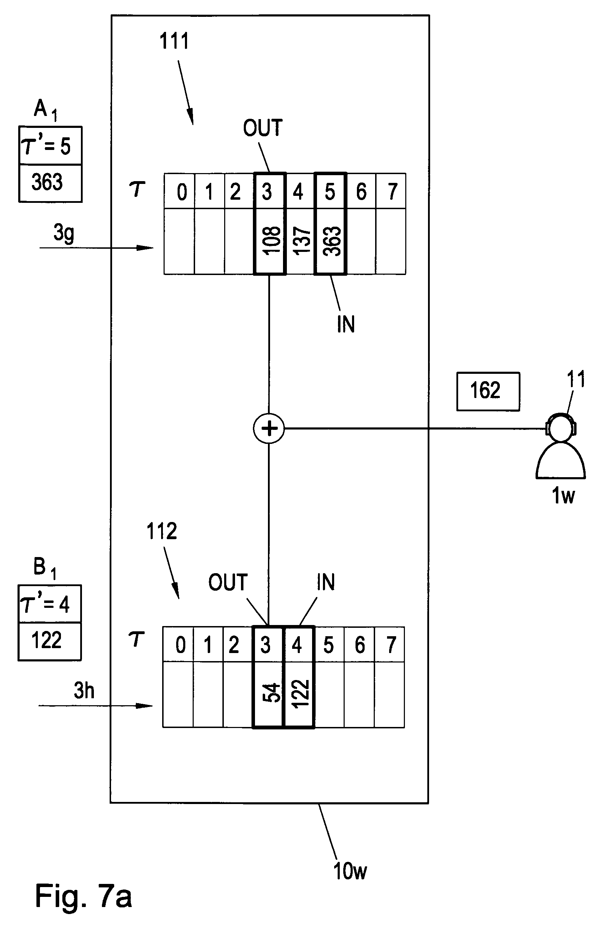

In Fig. 7a ist die Überlagerung der Sprachsignale zu einem ersten Zeitpunkt dargestellt. Beim empfangenden Teilnehmerrechner 10w langen die Datenpakete $A_1$, $B_1$ ein. Es wird jeweils der Divisionsrest der Division des übermittelten Zeitstempels $\tau'$ durch N ermittelt und die Sprachdatenwerte $A_1$, $B_1$ werden an die betreffenden Positionen im jeweiligen Speicher 111, 112 beschrieben. Die jeweils beschriebenen Speicherpositionen sind mit IN markiert. Im Teilnehmerrechner 10w zählt ein Index OUT die Zahlen von 0 bis N-1 durch und hat im vorliegenden Fall den Wert OUT=3. Sämtliche Werte in den Speichern 111, 112, die an der Speicherposition $\tau'=3$ abgespeichert sind, werden überlagert. Der einlangende Wert 363 des Sprachdatenpakets $A_1$ wird an die durch die im Datenpaket $A_1$ mit $\tau = 5$ angegebene Stelle im Speicher 111 geschrieben. Der einlangende Wert 122 des Sprachdatenpakets $B_1$ wird an die durch die im Da-

tenpaket $B_1$ mit $\tau = 4$ angegebene Stelle im Speicher 112 geschrieben. Im Falle der Bestimmung des Ausgangssignals durch Überlagerung der Sprachdaten a, b ergibt sich der Wert f[OUT] = a[OUT] + b[OUT] = 108 + 54 = 162. Am Ausgang des empfangenden Teilnehmerrechners 1w liegt der Datenwert w[OUT] an, der dem empfangenden Teilnehmer 10w zur Kenntnis gebracht wird. Alternativ kann auch das Ausgangssignal am Teilnehmerrechner 10w durch eine Auswahl eines der beiden Sprachdaten a oder b bestimmt werden.

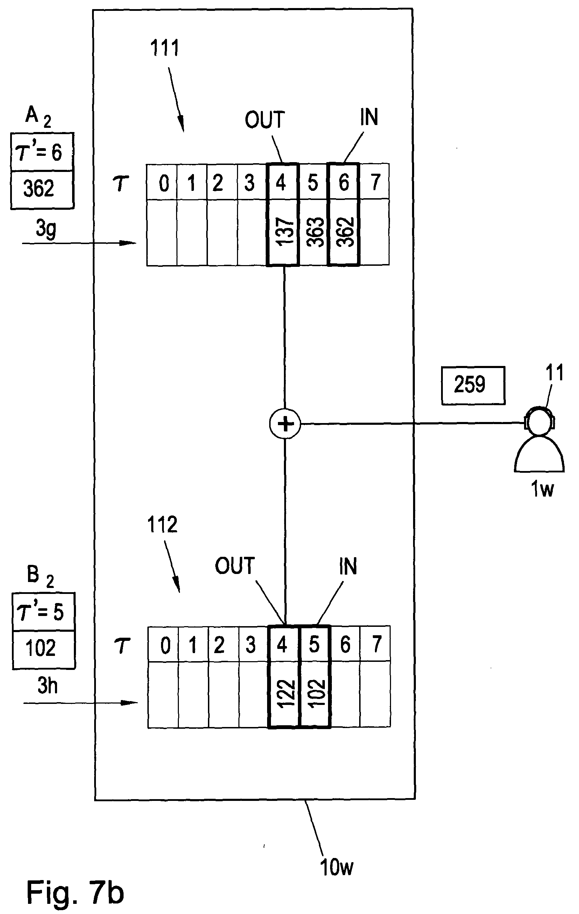

In **Fig. 7b** ist die Überlagerung der Sprachsignale a, b zu einem zweiten Zeitpunkt dargestellt. Beim empfangenden Teilnehmerrechner 10 langen die Datenpakete $A_2$, $B_2$ ein. Es wird jeweils der Divisionsrest der Division des übermittelten Zeitstempels $\tau'$ durch N ermittelt und die Sprachdatenwerte $A_2$, $B_2$ werden an die betreffenden Positionen im jeweiligen Speicher 111, 112 beschrieben. Die jeweils beschriebenen Speicherpositionen sind mit IN markiert. Im Teilnehmerrechner 10w zählt ein Index OUT die Zahlen von 0 bis N-1 durch und hat im vorliegenden Fall den Wert OUT =4. Sämtliche Werte in den Speichern 111, 112, die an der Speicherposition $\tau'=4$ abgespeichert sind, werden überlagert. Der einlangende Wert 362 des Sprachdatenpakets $A_2$ wird an die durch die im Datenpaket $A_2$ mit $\tau = 6$ angegebene Stelle im Speicher 111 geschrieben. Der einlangende Wert 102 des Sprachdatenpakets $B_2$ wird an die durch die im Datenpaket $B_2$ mit $\tau = 5$ angegebene Stelle im Speicher 112 geschrieben. Im Falle der Bestimmung des Ausgangssignals durch Überlagerung der Sprachdaten a, b ergibt sich der Wert f[OUT] = a[OUT] + b[OUT] = 259. Am Ausgang des empfangenden Teilnehmerrechners 10y liegt der Datenwert w[OUT] an, der dem empfangenden Teilnehmer 10w zur Kenntnis gebracht wird. Alternativ kann auch das Ausgangssignal am Teilnehmerrechner 10w durch eine Auswahl eines der beiden Sprachdaten a oder b bestimmt werden.

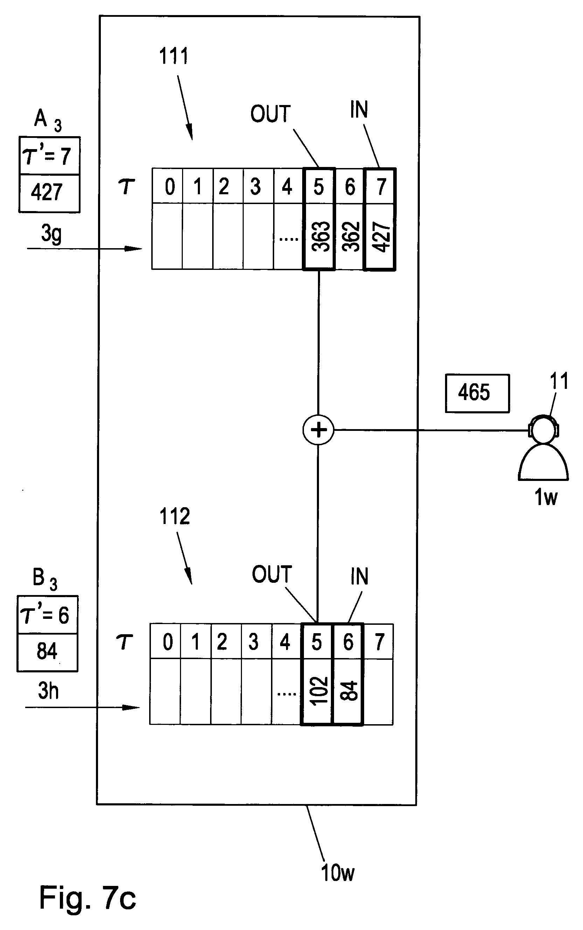

In Fig. 7c ist die Überlagerung der Sprachsignale a, b zu einem dritten Zeitpunkt dargestellt. Beim empfangenden Teilnehmerrechner 10 langen die Datenpakete $A_3$, $B_3$ ein. Es wird jeweils der Divisionsrest der Division des übermittelten Zeitstempels $\tau'$ durch N ermittelt und die Sprachdatenwerte $A_3$, $B_3$ werden an die betreffenden Positionen im jeweiligen Speicher 111, 112 beschrieben. Die jeweils beschriebenen Speicherpositionen sind mit IN markiert. Im Teilnehmerrechner 10w zählt ein Index die Zahlen von 0 bis N-1 durch und hat im vorliegenden Fall den Wert OUT =5. Sämtliche Werte in den Speichern 111, 112, die an der Speicherposition $\tau'=5$ abgespeichert sind, werden. Der einlangende Wert 427 des Sprachdatenpakets $A_3$ wird an die durch die im Datenpaket $A_3$ mit $\tau = 7$ angegebene Stelle im Speicher 111 geschrieben. Der einlangende Wert 84 des Sprachdatenpakets $B_3$ wird an die durch die im Datenpaket $B_3$ mit $\tau = 6$ angegebene Stelle im Speicher 112 geschrieben. Im Falle der Bestimmung des Ausgangssignals durch Überlagerung der Sprachdaten a, b ergibt sich der Wert f[OUT] = a[OUT] + b[OUT] = 363 + 102 = 465. Am Ausgang des empfangenden Teilnehmerrechners 10w liegt der Datenwert w[OUT] an, der dem empfangenden Teilnehmerrechner 1w zur Kenntnis gebracht wird. Alternativ kann auch das Ausgangssignal am Teilnehmerrechner 10w durch eine Auswahl eines der beiden Sprachdaten a oder b bestimmt werden.

Anstelle der Überlagerung der Sprachdaten im empfangenden Teilnehmerrechner 10w besteht auch die Möglichkeit, dass der empfangende Teilnehmerrechner 10w unter den zur Verfügung stehenden Datenpaketen $A_1$, ..., An, $B_1$, ..., $B_n$ mit jeweils demselben weiteren Zeitstempel $\tau'$ eine Auswahl vornimmt. So kann beispielsweise vorgegeben werden, dass der erste Kommunikationsserver 2a priorisiert wird und von diesem stammende Datenpakete $A_1$, ..., $A_n$, gegenüber den vom zweiten Kommunikationsserver 2b stammenden Datenpaketen $B_1$, ..., $B_n$ bevorzugt werden. Sofern vom priorisierten Kommunikationsserver 2a keine Datenpakete mit einem bestimmten weiteren Zeitstempel $\tau'$ zur Verfügung stehen, kann durch Auswahl auf die Datenpakete $B_1$, ..., $B_n$ des zweiten Kommunikationsservers 2b zurückgegriffen werden. Aufgrund der Kenntnis über den genauen Aufnahmezeitpunkt entstehen trotz des unterschiedlichen Datenpfads der Datenpakete $B_1$, ..., $B_n$ gegenüber den Datenpaketen $A_1$, ..., $A_n$ des ersten Kommunikationservers 2a beim Umschalten keine Artefakte.

Es ist natürlich selbstverständlich möglich, dass jeder der Teilnehmerrechner 10w...10z gleichzeitig Sprachdaten überträgt und die Sprachdaten der übrigen Teilnehmerrechner 10w...10z empfängt, d.h. gleichzeitig als sendender und empfangender Teilnehmerrechner fungiert. In diesem Fall werden alle Sprachdaten in den Servern 2a, 2b einander überlagert und durch Überlagerung erstellte Datenpakete A, B an alle Teilnehmerrechner 10w...10z übertragen.

Es ist darüber hinaus auch möglich, eine Sprachkommunikation nur zwischen zwei Teilnehmerrechnern 10x, 10w zu erzielen, ohne dass eine Konferenzschaltung erforderlich wäre. Eine solche Ausführungsform der Erfindung weist zumindest zwei Kommunikationsserver 2a, 2b auf, die mit den beiden Teilnehmerrechnern 10x, 10w verbunden sind. Der sendende Teilnehmerrechner 10x erstellt jeweils Sprachdaten, die wie im vorigen Ausführungsbeispiel dargestellt, an die Kommunikationsserver 2a, 2b übertragen werden. Während im vorigen Ausführungsbeispiel in den einzelnen Kommunikationsservern 2a, 2b jeweils eine Summation der einzelnen Sprachdatenwerte x, y, z vorgenommen wird, wird bei diesem Ausführungsbeispiel der Erfindung lediglich eine Zuweisung eines weiteren Zeitstempels vorgenommen und zwar auf dieselbe Weise wie im ersten Ausführungsbeispiel der Erfindung. Die Sprachdaten werden wie beim ersten Ausführungsbeispiel der Erfindung an den empfangenden Teilnehmerrechner 10w übertragen, der die in den Datenpaketen $A_1$, ..., An, $B_1$, ..., $B_n$ enthaltenen Sprachdaten entweder summiert oder die Datenpakete $A_1$, ..., $A_n$, $B_1$, ..., $B_n$ eines der Kommunikationsserver 2a, 2b auswählt. Die ausgewählten oder summierten Sprachdaten werden über den Kopfhörer 11 ausgegeben. Auch in diesem Ausführungsbeispiel können beide Teilnehmerrechner 10w, 10x als sendender und empfangender Teilnehmerrechner ausgebildet sein.

**Patentansprüche**

1.  Verfahren zur Übermittlung von Sprachdaten von einem sendenden Teilnehmer (1x) an einen empfangenden Teilnehmer (1w), wobei dem sendenden Teilnehmer (1x) jeweils ein sendender Teilnehmerrechner (10x) und dem empfangenden Teilnehmer (1w) ein empfangender Teilnehmerrechner (1w) zugeordnet wird und die beiden Teilnehmerrechner (10x, 10w) über eine Mehrzahl von redundanten Kommunikationsservern (2a, 2b) vernetzt sind, **dadurch gekennzeichnet,**

    - **dass** vom sendenden Teilnehmer (1x) Sprachinformationen erstellt werden und diese Sprachinformationen vom jeweiligen sendenden Teilnehmerrechner (10x) in einzelne, numerische Sprachdatenwerte (x) unterteilt werden,
    - **dass** vom sendenden Teilnehmer (1x) Datenpakete $(X_1, ... X_n)$ umfassend jeweils zumindest einen numerischen Sprachdatenwert (x) erstellt werden, denen jeweils zumindest ein Zeitstempel $(\tau)$ in Form einer fortlaufenden Zahl zugewiesen ist, der die Reihenfolge der einzelnen Sprachdatenwerte (x) zu den Sprachdatenwerten anderer Datenpakete festlegt,
    - **dass** die Datenpakete $(X_1, ... X_n)$ des sendenden Teilnehmers (1x) an mit dem sendenden Teilnehmerrechner (10x) verbundene Kommunikationsserver (2a, 2b) übermittelt werden,
    - **dass** von jedem Kommunikationsserver (2a, 2b) jeweils weitere Datenpakte $(A_1, ..., A_n; B_1, ..., B_n)$ erstellt werden, denen jeweils zumindest ein vom sendenden Teilnehmerrechner (10x) übertragener Sprachdatenwert (x) und zumindest ein, weiterer Zeitstempel $(\tau')$ zugeordnet werden, wobei der Wert des weiteren Zeitstempels $(\tau')$ dem Rest der Division des Zeitstempels $(\tau)$ geteilt durch eine vorgegebene konstante positive ganze Zahl N entspricht, wobei N für sämtliche Kommunikationsserver (2a, 2b) gleich gewählt wird,

        - wobei N wie folgt festgelegt wird: N > $(t_{delay,max} - t_{delay,min}) / t_{samp}$,
        - wobei $t_{delay,max}$ die maximale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet,

        - wobei $t_{delay,min}$ die minimale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet, und
        - wobei $t_{samp}$ der Inversen der Abtastrate, entspricht, und

    - **dass** der empfangende Teilnehmerrechner (10w) ihm von den Kommunikationsservern (2a, 2b) übermittelte weitere Datenpakete $(A_1, ... A_n; B_1, ... B_n)$ empfängt und solche weiteren Datenpakete $(A_1, ... A_n; B_1, ... B_n)$ ermittelt, denen jeweils derselbe weitere Zeitstempel $(\tau')$ zugeordnet ist, und einen Sprachdatenwert (w) durch Auswahl oder Summation der in den weiteren Datenpaketen $(A_1, ... A_n; B_1, ... B_n)$ enthaltenen Sprachdatenwerte mit jeweils gleichem weiteren Zeitstempel $(\tau')$ ermittelt und dem empfangenden Teilnehmer (1 w) zur Verfügung hält.

2.  Verfahren zur Übermittlung von Sprachdaten zwischen mehreren sendenden Teilnehmern (1x, 1y, 1z) an zumindest einen empfangenden Teilnehmer (1w) in Form einer Konferenzschaltung, wobei jeder sendende Teilnehmer (1 x, 1y, 1z) über einen sendenden Teilnehmerrechner (10x, 10y, 10z) und jeder empfangende Teilnehmer (1w) über einen empfangenden Teilnehmerrechner (10w) verfügt, und diese über eine Mehrzahl von redundanten Kommunikationsservern (2a, 2b) vernetzt sind, **dadurch gekennzeichnet,**

    - **dass** von den sendenden Teilnehmern (1x, 1y, 1z) Sprachinformationen erstellt werden und diese Sprachinformationen vom jeweiligen sendenden Teilnehmerrechner (10x, 10y, 10z) in einzelne aufeinander folgende Sprachdatenwerte (x, y, z) unterteilt werden,
    - **dass** die sendenden Teilnehmer (1x, 1y, 1z) Datenpakete $(X_1, ... X_n, Y_1, ... Y_n, Z_1, ... Z_n)$ umfassend jeweils zumindest einen numerischen Sprachdatenwert (x, y, z) erstellen, denen jeweils zumindest ein Zeitstempel $(\tau)$ in Form einer fortlaufenden Zahl zugewiesen ist, der die Reihenfolge der einzelnen Sprachdatenwerte (x, y, z) zu den Sprachdatenwerten anderer Datenpakete desselben Teilnehmers (1 x, 1 y, 1z) festlegt,
    - **dass** die Datenpakete $(X_1, ... X_n, Y_1, ... Y_n, Z_1, ... Z_n)$ jedes sendenden Teilnehmers (1x, 1 y, 1z) an die mit dem sendenden Teilnehmerrechner (10x, 10y, 10z) verbundenen Kommunikationsserver (2a, 2b) übermittelt werden,
    - **dass** die Kommunikationsserver (2a, 2b) ihnen jeweils von den sendenden Teilnehmerrechnern (10x, 10y, 10z) übermittelte Datenpakete

$(X_1, ... X_n, Y_1, ... Y_n, Z_1, ... Z_n)$ empfangen und die in den Datenpaketen enthaltenen Sprachdatenwerte (x, y, z) abspeichern, wobei die einzelnen Sprachdatenwerte (x, y, z) jeweils mit einem weiteren Zeitstempel ($\tau$') verknüpft abgespeichert werden, der dem Rest der Division des Zeitstempels ($\tau$) geteilt durch eine vorgegebene positive ganze Zahl N entspricht,

- wobei N wie folgt festgelegt wird: $N > (t_{delay,max} - t_{delay,min}) / t_{samp}$,
- wobei $t_{delay,max}$ die maximale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet,
- wobei $t_{delay,min}$ die minimale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet, und
- wobei $t_{samp}$ der Inversen der Abtastrate, entspricht, und

- **dass** die Kommunikationsserver (2a, 2b) Sprachdatenwerte (x, y, z) einander zu Sprachdatenwerten (a, b) überlagern, die jeweils mit demselben weiteren Zeitstempel ($\tau$') verknüpft sind,
- **dass** die Kommunikationsserver (2a, 2b) aus den Sprachdatenwerten (a, b) weitere Datenpakete $(A_1...A_n, B_1...B_n)$ erstellen, denen sie jeweils das Resultat der Überlagerung der demselben weiteren Zeitstempel ($\tau$') zugeordneten Sprachdatenwerte (x, y z) sowie den jeweiligen Zeitstempel ($\tau$') zuordnen, und
- **dass** der empfangende Teilnehmerrechner (10w) sämtliche ihm von den Kommunikationsservern (2a, 2b) übermittelte Datenpakete $(A_1, ... A_n, B_1, ... B_n)$, denen jeweils derselbe Zeitstempel ($\tau$') zugeordnet ist, überlagert oder aus den übermittelte Datenpaketen $(A_1, ... A_n, B_1, ... B_n)$, denen derselbe Zeitstempel ($\tau$') zugeordnet ist, ein Datenpaket auswählt und dem empfangenden Teilnehmer (1w) zur Verfügung stellt

3. Verfahren nach Anspruch 1 oder 2, **dadurch gekennzeichnet, dass** sämtliche bei den Kommunikationsservern (2a, 2b) einlangenden Sprachdaten (x, y, z) zumindest einem weiteren Datenpaket $(A_1, ... A_n, B_1, ... B_n)$ zugeordnet und dem empfangenden Teilnehmer (1w) übermittelt werden.

4. Verfahren nach einem der vorangehenden Ansprüche, **dadurch gekennzeichnet, dass** jedem Datenpaket $(X_1, ... X_n, Y_1, ... Y_n, Z_1, ... Z_n)$ jeweils Sprachdatenwerte (x, y, z) in Form eines einzelnen Abtastwerts oder mehrerer Abtastwerte zugewiesen werden und dass die Sprachdaten (x, y, z) in Form von Abtastwerten mittels Addition in den Kommunikationsservern (2a, 2b) überlagert werden.

5. Verfahren nach einem der vorangehenden Ansprüche, **dadurch gekennzeichnet, dass** der Kommunikationsserver (2a, 2b) ausschließlich Datenpakete $(X_1, ... X_n, Y_1, ... Y_n, Z_1, ... Z_n)$ von sendenden Teilnehmerrechnern (10x, 10y, 10z) innerhalb eines vorgegebenen Zeitabschnitts für die Überlagerung heranzieht und/oder bereits für die Überlagerung herangezogene Datenpakete $(X_1, ... X_n, Y_1, ... Y_n, Z_1, ... Z_n)$ für weitere Überlagerungen nicht mehr heranzieht.

6. Verfahren nach einem der vorangehenden Ansprüche, **dadurch gekennzeichnet, dass** der empfangende Teilnehmerrechner (10w) ausschließlich Sprachdaten (a, b) von Kommunikationsservern (2a, 2b) innerhalb eines vorgegebenen Zeitabschnitts für die Überlagerung heranzieht und/oder bereits für die Überlagerung herangezogene Sprachdaten (a, b) für weitere Überlagerungen nicht mehr heranzieht.

7. Sprachvermittlungssystem zur Übermittlung von Sprachdaten von einem sendenden Teilnehmer (1x) an einen empfangenden Teilnehmer (1w), wobei dem sendenden Teilnehmern (1 x) jeweils ein sendender Teilnehmerrechner (10x) und dem empfangenden Teilnehmer (1w) ein empfangender Teilnehmerrechner (10w) zugeordnet ist und die Teilnehmerrechner (10x, 10w) über eine Mehrzahl von redundanten Kommunikationsservern (2a, 2b) vernetzt sind, **dadurch gekennzeichnet,**

- **dass** der sendende Teilnehmerrechner (10x) eine Sprachaufzeichnungseinheit und eine Codierungseinheit aufweist, die die von der Sprachaufzeichnungseinheit erstellten Sprachinformationen in einzelne aufeinander folgende Sprachdatenwerte (x) unterteilt, und Datenpakete $(X_1, ... X_n)$ erstellt, die jeweils zumindest einen Sprachdatenwert (x) sowie einen den Sprachdatenwerten (x) zugeordneten und von einem Zeitgeber erstellten Zeitstempel ($\tau$) in Form einer fortlaufenden Zahl aufweisen, wobei der Zeitstempel ($\tau$) die Reihenfolge der Sprachdatenwerte (x) angibt,
- **dass** der sendende Teilnehmerrechner (10x) die Datenpakete $(X_1, ... X_n)$ an mit dem sendenden Teilnehmerrechner (10x) verbundene Kommunikationsserver (2a, 2b) übermittelt,
- **dass** die Kommunikationsserver (2a, 2b) jeweils weitere Datenpakte $(A_1, ..., A_n; B_1, ..., B_n)$

erstellen, denen jeweils zumindest ein vom sendenden Teilnehmerrechner (10x) übertragener Sprachdatenwert (x) und zumindest ein, weiterer Zeitstempel ($\tau'$) zugeordnet sind, wobei der Wert des weiteren Zeitstempels ($\tau'$) dem Rest der Division des Zeitstempels ($\tau$) geteilt durch eine vorgegebene positive ganze Zahl N entspricht, wobei N für sämtliche Kommunikationsserver (2a, 2b) gleich gewählt ist,

- wobei N wie folgt festgelegt ist: $N > (t_{delay,max} - t_{delay,min}) / t_{samp}$,
- wobei $t_{delay,max}$ die maximale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet,
- wobei $t_{delay,min}$ die minimale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet, und
- wobei $t_{samp}$ dem Inversen Abtastrate entspricht

- **dass** der empfangende Teilnehmerrechner (10w) ihm von den Kommunikationsservern (2a, 2b) übermittelte weitere Datenpakete ($A_1, ... A_n$; $B_1, ... B_n$) empfängt und solche weiteren Datenpakete ($A_1, ... A_n$; $B_1, ... B_n$) ermittelt, denen jeweils derselbe weitere Zeitstempel ($\tau'$) zugeordnet ist, und einen Sprachdatenwert (w) durch Auswahl oder Summation der in den weiteren Datenpaketen ($A_1, ... A_n$; $B_1, ... B_n$) enthaltenen Sprachdatenwerte mit jeweils gleichem weiteren Zeitstempel ($\tau'$) ermittelt und dem empfangenden Teilnehmer (1w) zur Verfügung hält.

8. Sprachvermittlungssystem zur Übermittlung von Sprachdaten zwischen mehreren sendenden Teilnehmern (1x, 1y, 1z) an zumindest einen empfangenden Teilnehmer (1w) in Form einer Konferenzschaltung, wobei sendende Teilnehmer (1x, 1 y, 1z) über einen sendenden Teilnehmerrechner (10x, 10y, 10z) und jeder empfangende Teilnehmer (1w) über einen empfangenden Teilnehmerrechner (10w) verfügt, und diese über eine Mehrzahl von redundanten Kommunikationsservern (2a, 2b) vernetzt sind,
**dadurch gekennzeichnet,**

- **dass** die sendenden Teilnehmer (1x, 1y, 1z) jeweils Sprachinformationen erstellen und diese Sprachinformationen vom jeweiligen sendenden Teilnehmerrechner (10x, 10y, 10z) in einzelne aufeinander folgende Sprachdatenwerte (x, y, z) unterteilt werden,
- **dass** die sendenden Teilnehmerrechner (10x, 10y, 10z) jeweils über ein eine Sprachaufzeichnungseinheit und eine Codierungseinheit verfügen, die die von der Sprachaufzeichnungseinheit erstellten Sprachinformationen in einzelne aufeinander folgende Sprachdatenwerte (x, y, z) unterteilt, und Datenpakete ($X_1, ... X_n$, $Y_1, ... Y_n$, $Z_1, ... Z_n$) erstellt, die jeweils die Sprachdatenwerte (x, y, z) sowie einen den Sprachdatenwerten (x) zugeordneten und von einem Zeitgeber erstellten Zeitstempel ($\tau$) in Form einer fortlaufenden Zahl aufweisen, wobei der Zeitstempel ($\tau$) die Reihenfolge der Sprachdatenwerte (x, y, z) zu den Sprachdatenwerten (x, y, z) von anderen vom selben Teilnehmerrechner (10x, 10y, 10z) erstellten Datenpaketen ($X_1, ... X_n$, $Y_1, ... Y_n$, $Z_1, ... Z_n$) angibt,
- **dass** die sendenden Teilnehmerrechner (10x, 10y, 10z) die von ihnen erstellten Datenpakete ($X_1, ... X_n$, $Y_1, ... Y_n$, $Z_1, ... Z_n$) an die mit dem jeweiligen sendenden Teilnehmerrechner (10x, 10y, 10z) verbundenen Kommunikationsserver (2a, 2b) übermitteln,
- **dass** die Kommunikationsserver (2a, 2b) ihnen jeweils von den sendenden Teilnehmerrechnern (10x, 10y, 10z) übermittelte Datenpakete ($X_1, ... X_n$, $Y_1, ... Y_n$, $Z_1, ... Z_n$) empfangen und die in den Datenpaketen enthaltenen Sprachdatenwerte (x, y, z) in einem Speicher abspeichern und die einzelnen Sprachdatenwerte (x, $y_1$ z) jeweils mit einem weiteren Zeitstempel ($\tau'$) verknüpft abspeichern, der dem Rest der Division des Zeitstempels ($\tau$) geteilt durch eine vorgegebene positive ganze Zahl N entspricht,

- wobei N wie folgt festgelegt ist: $N > (t_{delay,max} - t_{delay,min}) t_{samp}$,
- wobei $t_{delay,max}$ die maximale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet,
- wobei $t_{delay,min}$ die minimale Verzögerungszeit einer Verbindungsleitung zwischen einem sendenden oder empfangenden Teilnehmerrechner (10x, 10y, 10z, 10w) und einem Kommunikationsserver (2a, 2b) bezeichnet, und
- wobei $t_{samp}$ dem Inversen Abtastrate entspricht.

- **dass** die Kommunikationsserver (2a, 2b) Sprachdatenwerte (x, y, z) einander zu Sprachdatenwerten (a, b) überlagern, die jeweils mit demselben weiteren Zeitstempel ($\tau'$) verknüpft sind,

- **dass** die Kommunikationsserver (2a, 2b) aus den Sprachdatenwerten (a, b) weitere Datenpakte ($A_1...A_n$, $B_1...B_n$) erstellen, denen sie jeweils das Resultat der Überlagerung der demselben weiteren Zeitstempel ($\tau'$) zugeordneten Sprachdatenwerte (x, y, z) sowie den jeweiligen Zeitstempel ($\tau'$) zuordnen, und

- **dass** der empfangende Teilnehmerrechner (10w) sämtliche ihm von den Kommunikationsservern (2a, 2b) übermittelte Datenpakete ($A_1$, ... $A_n$, $B_1$, ... $B_n$), denen jeweils derselbe Zeitstempel ($\tau'$) zugeordnet ist, überlagert oder aus den übermittelten Datenpaketen ($A_1$, ... $A_n$, $B_1$, ... $B_n$), denen derselbe Zeitstempel ($\tau'$) zugeordnet ist, ein Datenpaket auswählt und dem empfangenden Teilnehmer (1w) zur Verfügung stellt,

9. Sprachvermittlungssystem nach Anspruch 7 oder 8, **dadurch gekennzeichnet, dass** jedes Datenpaket ($X_1$, ... $X_n$, $Y_1$, ... $Y_n$, $Z_1$, ... $Z_n$) jeweils Sprachdaten (x, y, z) in Form eines einzelnen Abtastwerts zugewiesen sind und dass die Überlagerungseinheiten der Kommunikationsserver (2a, 2b) oder der Teilnehmerrechner (10x, 10y, 10z, 10w) jeweils überlagerte als Summen der bei ihnen einlangenden Sprachdaten (x, $y_1$ z) bilden.

10. Sprachvermittlungssystem nach einem der Ansprüche 7 bis 9, **dadurch gekennzeichnet, dass** der Kommunikationsserver (2a, 2b) ausschließlich Sprachdaten (x, y, z) von sendenden Teilnehmerrechnern (10x, 10y, 10z) innerhalb eines vorgegebenen Zeitabschnitts für die Überlagerung heranzieht und/oder bereits für die Überlagerung herangezogene Sprachdaten (x, y, z) für weitere Überlagerungen nicht mehr heranzieht.

11. Sprachvermittlungssystem nach einem der Ansprüche 7 bis 10, **dadurch gekennzeichnet, dass** der empfangende Teilnehmerrechner (10w) ausschließlich Sprachdaten (a, b) von Kommunikationsservern (2a, 2b) innerhalb eines vorgegebenen Zeitabschnitts für die Überlagerung heranzieht und/oder bereits für die Überlagerung herangezogene Sprachdaten (a, b) für weitere Überlagerungen nicht mehr heranzieht.

12. Datenträger, auf dem ein Computerprogramm zur Ausführung eines Verfahrens nach einem der Ansprüche 1 bis 6 auf einem Kommunikationsserver (2a, 2b) und/oder Teilnehmerrechner (10x, 10y, 10z, 10w) abgespeichert ist.

**Claims**

1. Method for the transmission of speech data from a sending party (1x) to a receiving party (1w), wherein the sending party (1x) respectively is associated with a sending party computer (10x) and the receiving party (1w) is associated with a receiving party computer (1w), while the two party computers (10x, 10w) are interconnected via a plurality of redundant communication servers (2a, 2b),

**characterized in that**,

- the sending party (1x) speech information is created and this speech information is divided by the respective sending party computer (10x) into individual, numerical speech data values (x),

- data packets (X1, ... Xn) from the sending party (1x), each comprise at least one numeric speech data value (x), each of which is associated with at least a timestamp (T) in the form of a consecutive number which determines the sequence of the individual speech data values (x) with respect to the speech data values of the other data packets

- the data packets (X1, ... Xn) of the sending party (1 x) are transmitted to the communication servers (2a, 2b) connected to the sending party computer (10x),

- further data packets (A1, ..., An, B1, ..., Bn) are created by each communication server (2a, 2b), each of which is associated with at least one speech data value (x) transmitted from the sending party computer (10x), and at least a further time stamp (T'), wherein the value of the further time stamp (T') corresponds to the remainder of the time stamp (T) divided by a predetermined constant positive integer N, wherein N is selected to be equal for all communication servers (2a, 2b),

- wherein N is determined as follows: N > ($t_{delay,max}$ - $t_{delay,min}$) / $t_{samp}$,

- wherein $t_{delay,max}$ refers to the maximum delay time of a connection line between a sending or receiving party computer (10x, 10y, 10z, 10w) and a communication server (2a, 2b),

- wherein $t_{delay,min}$ refers to the minimum delay time of a connection line between a sending or receiving party computer (10x, 10y, 10z, 10w) and a communication server (2a, 2b), and

- wherein $t_{samp}$ corresponds to the inverse of the sampling rate, and

- the receiving party computer (10w) receives additional data packets (A1, ... An, B1, ... Bn) transmitted to it by the communications servers (2a, 2b) and determines which of the further data packets (A1, ... An; B1, ... Bn) is each associated with the same additional time-stamp (T), and determines a speech data value (w) by selection or summation of the speech data values contained in the further data packets (A1, ... An, B1, ... Bn) each with the same timestamp (T'), and holds it available for the receiving party (1w).

2. Method for the transmission of speech data between multiple sending parties (1x, 1 y, 1z) to at least one receiving party (1w) in the form of a conference call, wherein each sending party (1 x, 1 y, 1 z) is associated with a sending party computer (10x, 10y, 10z) and each receiving party (1w) is associated with a receiving party computer (10w), and these are networked via a plurality of redundant communication servers (2a, 2b), **characterized in that**,

- speech information is created by the sending parties (1 x, 1 y, 1 z) and this speech information is divided by the respective sending party computers (10x, 10y, 10z) into individual consecutive speech data values (x, y, z),
- the sending parties (1 x, 1 y, 1 z) create data packets (Xb ... Xn, Yb ... Yn, Z1, ... Zn) each of which comprises at least one numerical speech data value (x, y, z) each of which is associated with at least one timestamp (T) in the form of a consecutive number, which determines the sequence of the speech data values (x, y, z) with respect to the speech data values of the other data packets from the same party (1 x, 1 y, 1 z),
- the data packets ($X_1$, ... $X_n$, $Y_1$, ... $Y_n$, $Z_1$, ... $Z_n$) of each sending party (1x, 1y, 1z) are transmitted to the communication servers (2a, 2b) connected to the sending party computers (10x, 10y, 10z),
- the communication servers (2a, 2b) each receive data packets ($X_1$, ... $X_n$, $Y_1$, ... $Y_n$, $Z_1$, ... $Z_n$) transmitted by the sending party computers (10x, 10y, 10z) and store the speech data values contained in the data packets (x, y, z), wherein the individual speech data values (x, y, z) are respectively stored with a further time stamp (T') which corresponds to the remainder of the time stamp (T) divided by a predetermined positive integer N,
- wherein N is determined as follows: N > ($t_{delay,max}$ - $t_{delay,min}$) / $t_{samp}$,
- wherein $t_{delay,max}$ refers to the maximum delay time of a connection line between a sending or receiving party computer (10x, 10y, 10z, 10w) and a communication server (2a, 2b),
- wherein $t_{delay,min}$ refers to the minimum delay time of a connection line between a sending or receiving party computer (10x, 10y, 10z, 10w) and a communication server (2a, 2b), and
- wherein $t_{samp}$ corresponds to the inverse of the sampling rate, and
- the communication server (2a, 2b) speech data values (x, y, z) superpose further speech data values (a, b) which are respectively associated with the same further time stamp (T'),
- the communication servers (2a, 2b) create further data packets (A1 ... An, B1 ... Bn) from the speech data values (a, b) which are respectively the result of the superposing of the speech data values (x, y, z) associated with the same further time stamp (T'), as well as the respective time stamp (T'), and
- the receiving party computer (10w) superposes all the data packets (A1, ... An, B1, ... Bn) transmitted by the communications servers (2a, 2b), each of which is associated with the same timestamp (T'), or selects a data packet from among the transmitted data packets (A1, ... an, B1, ... Bn) that are associated with the same timestamp (T'), and are held available for the receiving party (1w).

3. Method according to claim 1 or 2, **characterized in that** all the speech data (x, y, z) reaching the communication servers (2a, 2b) is associated with at least one further data packet (A1, ... An, B1, ... Bn) and is transmitted to the receiving party (1w).

4. Method according to any one of the preceding claims, **characterized in that** each data packet (Xb ... Xn, Yb ... Yn, Z1, ... Zn) is respectively associated speech data values (x, y, z) in the form of an individual sample value or a plurality of sample values and that the speech data (x, y, z) is superposed in the form of sampling values by means of addition in the communications servers (2a, 2b).

5. Method according to any one of the preceding claims, **characterized in that** the communication servers (2a, 2b) only take into account the data packets (X1, ... Xn, Y1, ... Yn, Z1, ... Zn) transmitted from the sending party computer (10x, 10y, 10z) within a predetermined period of time for the superposing and/or no longer take into account the data packets ($X_1$, ... $X_n$, $Y_1$, ... $Y_n$, $Z_1$, ... $Z_n$) already taken into account for the superposing, for further superposing.

6. Method according to any one of the preceding claims, **characterized in that** the receiving party computer (10w) only takes into account speech data (a, b) from the communication servers (2a, 2b) within a predetermined period of time for superposing and/or no longer takes into account speech data (a, b) already taken into account for the superposing, for further superposing.

7. Speech communication system for the transmission of speech data from a sending party (1x) to a receiving party (1w), wherein each of the sending parties (1x) is associated with a sending party computer (10x), while the receiving party (1w) is associated with a receiving party computer (10w), and the party computers (10x, 10w) are interconnected via a plurality of redundant communication servers (2a, 2b), **characterized in that,**

- the sending party computer (10x) has a speech recording unit and an encoding unit that divides the speech information produced by the speech recording unit into individual consecutive speech data values (x), and creates data packets (X1, ... Xn), each having at least a speech data value (x), as well as a time stamp (T) in the form of a sequential number associated with the speech data values (x) and produced by a timer, wherein the time stamp (T) indicates the sequence of the speech data values (x),
- the sending party computer (10x) transmits the data packets (X1, ... Xn) to the communication servers (2a, 2b) connected to the sending party computer (10x),
- the communication servers (2a, 2b) each create further data packets (A1, ..., An; B1, ..., Bn), each of which is associated with at least one of the speech data values (x) transmitted by the sending party computer (10x) and at least one further time stamp (T'), wherein the value of the further time stamp (T') corresponds to the remainder of the time stamp (T) divided by a predetermined positive integer N, wherein N is selected to be equal for all the communication servers (2a, 2b),
- wherein N is determined as follows: $N > (t_{dela y,max} - t_{dela y,mi n}) / t_{samp}$,
- wherein $t_{delay,max}$ refers to the maximum delay time of a connection line between a sending or receiving party computer (10x, 10y, 10z, 10w) and a communication server (2a, 2b),
- wherein $t_{delay,min}$ refers to the minimum delay time of a connection line between a sending or receiving party computer (10x, 10y, 10z, 10w) and a communication server (2a, 2b), and
- wherein $t_{samp}$ corresponds to the inverse of the sampling rate, and
- the receiving party computer (1 0w) receives the further data packets (A1, ... An, B1, ... Bn) transmitted by the communications servers (2a, 2b) and determines such further data packets (A1, ... An; B1, ... Bn), each of which is associated with the same additional time-stamp (T'), while a speech data value (w) is determined through selection or summation of the speech data values contained in the further data packets (A1,... an, B1, ... Bn) with the same timestamp (T'), and holds them available for the receiving party (1w).

**8.** Speech communication system for the transmission of speech data between multiple sending parties (1 x, 1 y, 1 z), to at least one receiving party (1 w) in the form of a conference call, wherein the sending parties (1 x, 1 y, 1 z) are associated with a sending party computer (10x, 10y 10z), while each receiving party (1w) is associated with a receiving party computer (10w), and these are networked via a plurality of redundant communication servers (2a, 2b), **characterized in that,**

- the sending parties (1 x, 1 y, 1 z) create each speech information and this speech information is divided by the respective sending party computers (10x, 10y, 10z) into individual consecutive speech data values (x, y, z),
- the sending party computers (10x, 10y, 10z) each have a speech recording unit and an encoding unit that divides the speech information produced by the speech recording unit into individual consecutive speech data values (x, y, z) and creates data packets ($X_1$, ... $X_n$, $Y_1$, ... $Y_n$, $Z_1$, ... $Z_n$), each having at least a speech data value (x, y, z), as well as a time stamp (T) in the form of a sequential number associated with the speech data values (x, y, z), and produced by a timer, wherein the time stamp (T) indicates the sequence of the speech data values (x, y, z) with respect to the speech data values (x, y, z) of the other data packets ($X_1$, ... $X_n$, $Y_1$, ... $Y_n$, $Z_1$, ... $Z_n$) generated by the same party computers (10x 10y, 10z)
- the sending party computers (10x, 10y, 10z) transmit the data packets (X1, ... Xn, Y1, ... Yn, Z1, ... Zn) they have produced to the communication servers (2a, 2b) connected to the respective sending party computers (10x, 10y, 10z),
- the communication servers (2a, 2b) each receive the data packets (X1, ... Xn, Y1, ... Yn, Z1, ... Zn) transmitted to them by the sending party computers (10x, 10y, 10z), and store the speech data values contained in the data packets (x, y, z) in a memory, and store each of the individual language data values (x, y, z) with a further associated time stamp (T') corresponding to the remainder of the time stamp (T) divided by a predetermined positive integer N,
- wherein N is determined as follows: $N > (t_{delay,max} - t_{dela y,mi n}) / t_{samp}$,
- wherein $t_{delay,max}$ refers to the maximum delay time of a connection line between a sending or receiving party computer (10x, 10y, 10z, 10w) and a communication server (2a, 2b),
- wherein $t_{delay,min}$ refers to the minimum delay time of a connection line between a sending or receiving party computer (10x, 10y, 10z, 10w) and a communication server (2a, 2b), and
- wherein $t_{samp}$ corresponds to the inverse of the sampling rate.
- the communication server (2a, 2b) speech data values (x, y, z) superpose speech data values (a, b), each of which is associated with the same further time stamp (T'),
- the communication servers (2a, 2b) create further data packages (A1 ... An, B$_1$ ... Bn) from the speech data values (a, b), wherein they are each associated with the result of the superposing of the associated speech data values (x, y, z) with the same additional time-stamp (T') as well as the respective time stamp (T'), and
- the receiving party computer (10w) superposes all the data packets (A1, ... An, B1, ... Bn) associated with the same timestamp (T') transmitted to it from the communications servers (2a, 2b), or selects a data packet from the transmitted data packets (A1, ... an, B1, ... Bn) associated with the same timestamp (T'), and holds it available for the receiving party (1w).

9. Speech communication system according to claim 7 or 8, **characterized in that** each data packet $(X_1, ... X_n, Y_1, ... Y_n, Z_1, ... Z_n)$ respective speech data (x, y, z) is associated in the form of an individual sampling value, wherein the superposed units of the communication servers (2a, 2b) or the party computer (10x, 10y, 10z, 10w) are respectively superposed as sums of the incoming speech data (x, y, z).

10. Speech communication system according to one of the claims 7 to 9, **characterized in that** the communication servers (2a, 2b) only take into account speech data (x, y, z) from the sending party computers (10x, 10y, 10z) within a predetermined period of time for the superposing, and/or no longer take into account the speech data (x, y, z) already taken into account for the superposing, for further superposing.

11. Speech communication system according to one of the claims 7 to 10, **characterized in that** the receiving party computer (10w) only takes into account speech data (a, b) from the communication servers (2a, 2b) within a predetermined time period for the superposing and/or no longer take into account the the speech data (a, b) already taken into account for the superposing, for further superposing.

12. Data medium on which is stored a computer program for performing a method according to one of the claims 1 to 6 on a communication server (2a, 2b) and/or party computer (10x, 10y, 10z, 10w).

**Revendications**

1. Procédé pour la transmission de données vocales d'un abonné émetteur (1x) à un abonné récepteur (1w), un ordinateur d'abonné émetteur (10x) étant attribué à l'abonné émetteur (1 x) et un ordinateur d'abonné récepteur (10w) étant attribué à l'abonné émetteur (1w) et les deux ordinateurs des abonnés (10x, 10w) étant mise en réseau par l'intermédiaire d'une pluralité de serveurs de communication (2a, 2b) redondants,

**caractérisé en ce que**

- des informations vocales sont créées par l'abonné émetteur (1 x) et ces informations vocales sont divisées par l'ordinateur d'abonné (10x) correspondant en valeurs de données vocales numériques (x),
- des paquets de données (X1, ... Xn), comprenant chacune au moins une valeur de donnée vocale numérique (x) sont créées par l'abonné émetteur (1 x), auxquels au moins un horodatage (T), sous la forme d'un chiffre continu, est attribué, qui détermine l'ordre des différentes valeurs de données vocales (x) par rapport aux valeurs de données vocales des paquets de données supplémentaires,
- les paquets de données $(X_1, ... X_n)$ de l'abonné émetteur (1x) sont transmis au serveur de communication (2a, 2b) relié à l'abonné émetteur (10x),
- chaque serveur de communication (2a, 2b) crée chacun des paquets de données supplémentaires $(A_1, ..., A_n ; B_1, ..., B_n)$, dont au moins une valeur de donnée vocale (x), transmise par l'abonné émetteur (10x) et auxquels au moins un horodatage supplémentaire (T') est attribué, la valeur de l'horodatage supplémentaire (T') correspondant au reste de la division de l'horodatage (T) par un chiffre entier positif constant N, N étant choisi égal pour l'ensemble des serveurs de communication (2a, 2b),

- N étant déterminé comme suit: $N > (t_{delay,max} - t_{delay,min}) / t_{samp}$,
- $t_{delay,max}$ désignant le temps de retard maximal d'une ligne de liaison entre un ordinateur émetteur ou récepteur (10x, 10y, 10z, 10w) et un serveur de communication (2a, 2b),
- $t_{delay,max}$ désignant le temps de retard minimal d'une ligne de liaison entre un ordinateur émetteur ou récepteur (10x, 10y, 10z, 10w) et un serveur de communication (2a, 2b),
- $t_{samp}$ correspondant à l'inverse des taux d'échantillonnage, et

- l'ordinateur d'abonné récepteur (10w) reçoit des paquets de données supplémentaires (A1, ... An ; B1, ... Bn), qui lui sont transmis par les serveurs de communication (2a, 2b) et détermine les paquets de données supplémentaires $(A_1, ... A_n ; B_1, ... B_n)$, auxquels est attribué le même horodatage supplémentaire (T'), et détermine une valeur de donnée vocale (w) par sélection ou somme des valeurs de données vocales contenues dans les paquets de données supplémentaires ($A_1, ... A_n$ ; $B_1, ... B_n$) avec le même horodatage supplémentaire (T') et la met à la disposition de l'abonné récepteur (1w).

2. Procédé de transmission de données vocales entre plusieurs abonnés émetteurs (1 x, 1 y, 1 z) à au moins un abonné récepteur (1w) sous la forme d'un branchement en conférence, chaque abonné émetteur (1x, 1y 1z) disposant d'un ordinateur d'abonné émetteur (10x, 10y 10z) et chaque abonné récepteur (1w) disposant d'un ordinateur d'abonné récepteur (10w) et ceux-ci étant mis en réseau par l'intermédiaire d'une pluralité de serveurs de communication (2a, 2b) redondants, **caractérisé en ce que**

- les abonnés émetteurs (1 x, 1 y, 1 z) créent des informations vocales et ces informations vocales sont divisées par l'ordinateur d'abonné émetteur (10x, 10y 10z) correspondant en différentes valeurs de données vocales (x, y, z) successives,
- les abonnés émetteurs (1x, 1y, 1z) créent des paquets de données ($X_1, ... X_n, Y_1, ... Y_n, Z_1, ... Z_n$) comprenant chacun au moins une valeur de donnée vocale numérique (x, y, z), auxquels au moins un horodatage (T), sous la forme d'un chiffre continu, est attribué, qui détermine l'ordre des différentes valeurs de données vocales (x, y, z) par rapport aux valeurs de données vocales des paquets de données supplémentaires du même abonné (1 x, 1 y, 1 z),
- les paquets de données ($X_1, ... X_n, Y_1, ... Y_n, Z_1, ... Z_n$) de chaque abonné émetteur (1 x, 1 y, 1 z) sont transmis aux serveurs de communication (2a, 2b) reliés à l'ordinateur d'abonné émetteur (10x, 10y, 10z),
- les serveurs de communication (2a, 2b) reçoivent les paquets de données ($X_1, ... X_n, Y_1, ... Y_n, Z_1, ... Z_n$) qui lui sont transmis par les ordinateurs d'abonnés émetteurs (10x, 10y, 10z) et enregistrent les valeurs de données vocales (x, y, z) contenues dans les paquets de données, les différentes valeurs de données vocales (x, y, z) étant chacune enregistrées en lien avec un horodatage supplémentaire (T'), qui correspond au reste de la division de l'horodatage (T) par un chiffre entier positif N prédéterminé,

- N étant déterminé comme suit : $N > (t_{delay,max} - t_{delay,min}) / t_{samp}$,

-- $t_{delay,max}$ désignant le temps de retard maximal d'une ligne de liaison entre un ordinateur émetteur ou récepteur (10x, 10y, 10z, 10w) et un serveur de communication (2a, 2b),

- $t_{delay,max}$ désignant le temps de retard minimal d'une ligne de liaison entre un ordinateur émetteur ou récepteur (10x, 10y, 10z, 10w) et un serveur de communication (2a, 2b),
- $t_{samp}$ correspondant à l'inverse des taux d'échantillonnage, et

- les serveurs de communication (2a, 2b) superposent des valeurs de données vocales (x, y, z) avec des valeurs de données vocales (a,b), qui sont liées au même horodatage supplémentaire (T'),
- les serveurs de communication (2a, 2b) créent, à partir des valeurs de données vocales (a, b), des paquets de données supplémentaires ($A1 ... A_n, B_1 ... B_n$) auxquels ils attribuent chacun le résultat de la superposition des valeurs de données (x, y, z) correspondant au même horodatage supplémentaire (T') ainsi que l'horodatage (T'), et
- l'ordinateur d'abonné récepteur (10w) superpose l'ensemble des paquets de données ($A_1, ... A_n, B_1, ... B_n$) qui lui sont transmis par les serveurs de communication (2a, 2b), auxquels est attribué le même horodatage (T') ou sélectionne, parmi les paquets de données ($A_1, ... A_n, B_1, ... B_n$) transmis, auxquels est attribué le même horodatage (T'), un paquet de données et le met à la disposition de l'abonné émetteur (1w).

3. Procédé selon la revendication 1 ou 2, **caractérisé en ce que** toutes les données vocales (x, y, z) arrivant dans les serveurs de communication (2a, 2b) sont attribuées à au moins un paquet de données supplémentaire ($A_1, ... A_n, B_1, ... B_n$) et sont transmises à l'abonné récepteur (1w).

4. Procédé selon l'une des revendications précédentes, **caractérisé en ce qu'**à chaque paquet de données ($X_1, ... X_n, Y_1, ... Y_n, Z_1, ... Z_n$), des valeurs de données vocales (x, y, z) sont attribuées sous la forme d'une valeur d'échantillonnage ou de plusieurs valeurs d'échantillonnage et **en ce que** les données vocales (x, y, z) sont superposées sous la forme de valeurs d'échantillonnage au moyen d'une addition dans les serveurs de communication (2a, 2b).

5. Procédé selon l'une des revendications précédentes, **caractérisé en ce que** le serveur de communication (2a, 2b) utilise exclusivement des paquets de données ($X_1, ... X_n, Y_1, ... Y_n, Z_1, ... Z_n$) de l'ordinateur d'abonné émetteur (10x, 10y, 10z) à l'intérieur d'un intervalle de temps prédéterminé pour la superposition et/ou n'utilise plus les paquets de données ($X_1, ... X_n, Y_1, ... Y_n, Z_1, ... Z_n$) déjà utilisés pour la superposition pour des superpositions supplémentaires.

**6.** Procédé selon l'une des revendications précédentes, **caractérisé en ce que** l'ordinateur d'abonné récepteur (10w) utilise exclusivement des données vocales (a, b) des serveurs de communication (2a, 2b) à l'intérieur d'un intervalle de temps prédéterminé pour la superposition et/ou n'utilise plus les données vocales (a, b) déjà utilisés pour la superposition pour des superpositions supplémentaires.

**7.** Système de transmission vocale pour la transmission de données vocales d'un abonné émetteur (1x) à un abonné récepteur (1w), un ordinateur d'abonné émetteur (10x) étant attribué à l'abonné émetteur (1x) et un ordinateur d'abonné récepteur (10w) étant attribué à l'abonné émetteur (1w) et les deux ordinateurs des abonnés (10x, 10w) étant mise en réseau par l'intermédiaire d'une pluralité de serveurs de communication (2a, 2b) redondants, **caractérisé en ce que**

- l'ordinateur d'abonné émetteur (10x) comprend une unité d'enregistrement vocal et une unité de codage, qui divise les informations vocales créées par l'unité d'enregistrement vocal en différentes valeurs de données vocales (x) successives et crée des paquets de données $(X_1, ... X_n)$, qui comprennent chacun une valeur de donnée vocale (x) ainsi qu'un horodatage (T) attribué aux valeurs de données vocales (x) et créé par une horloge sous la forme d'un chiffre continu, l'horodatage (T) indiquant l'ordre des valeurs de données vocales (x),
- l'ordinateur d'abonné émetteur (10x) transmet les paquets de données $(X_1, ... X_n)$ à des serveurs de communication (2a, 2b) reliés à l'ordinateur d'abonné émetteur (10x),
- les serveurs de communication (2a, 2b) créent chacun des paquets de données supplémentaires $(A_1, ... A_n ; B_1, ..., B_n)$, auxquels sont attribués au moins une valeur de donnée vocale (x) transmise par l'ordinateur d'abonné émetteur (10x) et au moins un horodatage supplémentaire (T'), la valeur de l'horodatage supplémentaire (T') correspondant au reste de la division de l'horodatage (T) par un chiffre entier positif N prédéterminé, N étant choisi égal pour tous les serveurs de communication (2a, 2b),

- N étant déterminé comme suit : N > $(t_{delay,max} - t_{delay,min}) / t_{samp}$,
- $t_{delay,max}$ désignant le temps de retard maximal d'une ligne de liaison entre un ordinateur émetteur ou récepteur (10x, 10y, 10z, 10w) et un serveur de communication (2a, 2b),

- $t_{delay,max}$ désignant le temps de retard minimal d'une ligne de liaison entre un ordinateur émetteur ou récepteur (10x, 10y, 10z, 10w) et un serveur de communication (2a, 2b),
- $t_{samp}$ correspondant à l'inverse des taux d'échantillonnage, et

- l'ordinateur d'abonné récepteur (10w) reçoit des paquets de données supplémentaires $(A1, ... An ; B1, ... Bn)$, qui lui sont transmis par les serveurs de communication (2a, 2b) et détermine les paquets de données supplémentaires $(A_1, ... A_n ; B_1, ... B_n)$, auxquels est attribué le même horodatage supplémentaire (T'), et détermine une valeur de donnée vocale (w) par sélection ou somme des valeurs de données vocales contenues dans les paquets de données supplémentaires $(A_1, ... A_n ; B_1, ... B_n)$ avec le même horodatage supplémentaire (T') et la met à la disposition de l'abonné récepteur (1w).

**8.** Système de transmission vocale pour la transmission de données vocales entre plusieurs abonnés émetteurs (1x, 1y, 1z) à au moins un abonné récepteur (1w) sous la forme d'un branchement en conférence, les abonnés émetteurs (1x, 1y, 1z) disposant d'un ordinateur d'abonné émetteur (10x, 10y, 10z) et chaque abonné récepteur (1w) disposant d'un ordinateur d'abonné récepteur (10w) et ceux-ci étant mis en réseau par l'intermédiaire d'une pluralité de serveurs de communication (2a, 2b) redondants, **caractérisé en ce que**

- les abonnés émetteurs (1x, 1y, 1z) créent des informations vocales et ces informations vocales sont divisées par l'ordinateur d'abonné émetteur (10x, 10y 10z) correspondant en différentes valeurs de données vocales (x, y, z) successives,
- les ordinateurs d'abonnés émetteurs (10x, 10y, 10z) sont équipés chacun d'une unité d'enregistrement vocal et d'une unité de codage qui divise les informations vocales créées par l'unité d'enregistrement vocal en différentes valeurs de données vocales (x, y, z) successives et crée des paquets de données $(X_1, ... X_n, Y_1, ... Y_n, Z_1, ... Z_n)$, qui comprennent chacun les valeurs de données vocales (x, y, z) ainsi qu'un horodatage (T), correspondant aux valeurs de données vocales (x) et créé par une horloge, sous la forme d'un chiffre continu, l'horodatage (T) indiquant l'ordre des valeurs de données vocales (x, y, z) par rapport aux valeurs de données vocales (x, y, z) des autres paquets de données $(X_1, ... X_n, Y_1, ... Y_n, Z_1, ... Z_n)$ créés par le même ordinateur d'abonné (10x, 10y, 10z),

- les ordinateurs d'abonnés émetteurs (10x, 10y, 10z) transmettent les paquets de données $(X_1, ... X_n, Y_1, ... Y_n, Z_1, ... Z_n)$ qu'ils ont créés aux serveurs de communication (2a, 2b) reliés aux ordinateurs d'abonnés émetteurs (10x, 10y, 10z) correspondants,

- les serveurs de communication (2a, 2b) reçoivent les paquets de données $(X_1, ... X_n, Y_1, ... Y_n, Z_1, ... Z_n)$ qui leur sont transmis par les ordinateurs d'abonnés émetteurs (10x, 10y, 10z) et enregistrent les valeurs de données vocales (x, y, z) contenus dans les paquets de données dans une mémoire et enregistrent les différentes valeurs de données vocales (x, y, z) de manière liée avec un horodatage (T') supplémentaire, qui correspond au reste de la division de l'horodatage (T) par un chiffre entier positif N prédéterminé,

    - N étant déterminé comme suit : $N > (t_{delay,max} - t_{delay,min}) / t_{samp}$,
    - $t_{delay,max}$ désignant le temps de retard maximal d'une ligne de liaison entre un ordinateur émetteur ou récepteur (10x, 10y, 10z, 10w) et un serveur de communication (2a, 2b),
    - $t_{delay,max}$ désignant le temps de retard minimal d'une ligne de liaison entre un ordinateur émetteur ou récepteur (10x, 10y, 10z, 10w) et un serveur de communication (2a, 2b),
    - $t_{samp}$ correspondant à l'inverse des taux d'échantillonnage, et

- les serveurs de communication (2a, 2b) superposent les valeurs de données vocales (x, y, z) avec des valeurs de données vocales (a, b), qui sont liées chacune au même horodatage supplémentaire (T'),

- les serveurs de communication (2a, 2b) créent, à partir des valeurs de données (a, b), des paquets de données supplémentaires $(A1 ... A_n, B_1 ... B_n)$ auxquels ils attribuent chacun le résultat de la superposition des valeurs de données vocales (x, y, z) attribuées au même horodatage (T'), ou sélectionne, à partir des paquets de données $(A1 ... A_n, B_1 ... B_n)$ transmis, auxquels le même horodatage (T') est attribué, un paquet de données et le met à la disposition de l'abonné récepteur (1w),

9. Système de transmission vocale selon la revendication 7 ou 8, **caractérisé en ce que** chaque paquet de données X1, ... Xn, $Y_1$, ... Yn, $Z_1$, ... Zn) est alloué à des données vocales (x, y, z) sous la forme d'une valeur d'échantillonnage individuelle et **en ce que** les unités de superposition des serveurs de communication (2a, 2b) ou des ordinateurs d'abonnés (10x, 10y, 10z, 10w) forment chacune des sommes superposées des données vocales (x, y, z) qui y arrivent.

10. Système de transmission vocale selon l'une des revendications 7 à 9, **caractérisé en ce que** le serveur de communication (2a, 2b) utilise exclusivement les données vocales (x, y, z) des ordinateurs d'abonnés émetteurs (10x, 10y, 10z) à l'intérieur d'un intervalle de temps prédéterminé pour la superposition et/ou n'utilise plus les données vocales (x, y, z) déjà utilisées pour la superposition, pour des superpositions supplémentaires.

11. Système de transmission vocale selon l'une des revendications 7 à 10, **caractérisé en ce que** l'ordinateur d'abonné récepteur (10w) utilise exclusivement les données vocales (a, b) des serveurs de communication (2a, 2b) à l'intérieur d'un intervalle de temps prédéterminé pour la superposition et/ou n'utilise plus les données vocales (a, b) déjà utilisées pour la superposition, pour des superpositions supplémentaires.

12. Support de données sur lequel est enregistré un programme informatique pour la mise en oeuvre d'un procédé selon l'une des revendications 1 à 6 sur un serveur de communication (2a, 2b) et/ou sur un ordinateur d'abonné (10x, 10y, 10z, 10w).

11
1w

r (t)

10w

3g
3h

3

2a
2b

3a
3b
3c
3d
3e
3f

10x
x(t)
12x
1x

10y
y(t)
12y
1y

10z
z(t)
12z
1z

Fig. 1

Fig. 2a

Fig. 2b

Fig. 3a

Fig. 3b

Fig. 4

| | X₁ | X₂ | X₃ |
|---|---|---|---|

12x

1x

$\tau_1 = 333$

$x[\tau_1] = 215$

$\tau_2 = 334$

$x[\tau_2] = 225$

$\tau_3 = 335$

$x[\tau_3] = 271$

12y

1y

Y₁

$\tau_1 = 577$

$y[\tau_1] = 123$

Y₂

$\tau_2 = 578$

$y[\tau_2] = 226$

Y₃

$\tau_3 = 579$

$y[\tau_3] = 228$

12z

1z

Z₁

$\tau_1 = 159$

$z[\tau_1] = 17$

Z₂

$\tau_2 = 160$

$x[\tau_2] = 23$

Z₃

$\tau_3 = 161$

$x[\tau_3] = 105$

2a

2b

Fig. 5

Fig. 6a

EP 2 913 946 B1

Fig. 6b

Fig. 6c

EP 2 913 946 B1

Fig. 7a

Fig. 7b

Fig. 7c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008147272 A1
- US 6327276 B1